(19) Europäisches Patentamt / European Patent Office / Office européen des brevets

(11) **EP 4 421 038 A1**

(12) **EUROPEAN PATENT APPLICATION**
published in accordance with Art. 153(4) EPC

(43) Date of publication:
**28.08.2024 Bulletin 2024/35**

(21) Application number: 22883153.3

(22) Date of filing: **30.05.2022**

(51) International Patent Classification (IPC):
*C01B 39/02* (2006.01)    *B01D 53/04* (2006.01)
*B01D 53/047* (2006.01)    *B01D 53/62* (2006.01)
*B01J 20/18* (2006.01)

(52) Cooperative Patent Classification (CPC):
**B01D 53/04; B01D 53/047; B01D 53/62;
B01J 20/18; C01B 39/02;** Y02C 20/40

(86) International application number:
**PCT/JP2022/021928**

(87) International publication number:
**WO 2023/067840 (27.04.2023 Gazette 2023/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.10.2021 JP 2021173424**

(71) Applicant: **Asahi Kasei Kabushiki Kaisha
Tokyo 1000006 (JP)**

(72) Inventor: **OKUBO, Atsushi
Tokyo 100-0006 (JP)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(54) **GIS-TYPE ZEOLITE, ADSORBENT, AND SEPARATION METHOD**

(57)    A GIS-type zeolite, having a silica/alumina ratio of 0.87 or more, in which, when a full width at half maximum of a peak derived from Al in a framework of the zeolite, observed in a $^{27}$Al-MAS-NMR spectrum, is defined as A, $A \leq 5.6$ ppm is satisfied.

[Figure 1]

ppm: 74 72 70 68 66 64 62 60 58 56 54 52 50

## Description

Technical Field

The present invention relates to a GIS-type zeolite, an adsorbing material, and a separation method.

Background Art

Zeolite can be used for adsorbents, desiccants, separating agents, catalysts, catalyst carriers, detergent aids, ion exchangers, wastewater treatment agents, fertilizers, food additives, cosmetic additives and the like, and, in particular, is useful in gas separation applications.

A zeolite having a GIS structure in codes for directing zeolite structures specified by the IZA (International Zeolite Association) is called a GIS-type zeolite. A GIS-type zeolite is a zeolite having a pore constituted by an oxygen 8-membered ring. Such a GIS-type zeolite is described in, for example, each of Patent Literatures 1 to 4 and Non-Patent Literatures 1 to 7.

Patent Literature 1 describes synthesis of a GIS-type zeolite for effective use of slag of coal burnt ash, and Patent Literature 2 describes an enhancement in thermal conductivity by formation of a zeolite film (GIS-type zeolite) on the surface of an aluminum plate. Non-Patent Literatures 1, 2 and 3 each show a GIS-type zeolite of silica-alumina, and almost no adsorption of carbon dioxide is found in all the reports. Non-Patent Literature 4 discloses a GIS-type zeolite of silicoaluminophosphate containing phosphoric acid, and there is found not only adsorption of carbon dioxide, but also adsorption of oxygen, nitrogen and methane. The amount of adsorption of carbon dioxide cannot be said to be sufficient. Non-Patent Literatures 5 and 6 also each show a GIS-type zeolite of silica-alumina, but do not mention any adsorption performance of carbon dioxide and the like. Patent Literatures 3 and 4 each show a GIS-type zeolite having a crystal structure adjusted, the GIS-type zeolite, although has adsorption ability of carbon dioxide, cannot be said to have a sufficient amount of adsorption of carbon dioxide, and the Literatures do not mention any adsorption-desorption hysteresis in an adsorption-desorption isotherm of carbon dioxide. Non-Patent Literature 7 shows a GIS whose cation is substituted with any of Li, Na, K, Rb and Cs and the zeolite has adsorption ability of carbon dioxide, but an adsorption-desorption hysteresis is observed in an adsorption-desorption isotherm of carbon dioxide.

Citation List

Patent Literatures

Patent Literature 1: Japanese Patent Laid-Open No. 06-340417
Patent Literature 2: National Publication of International Patent Application No. 2012-519148
Patent Literature 3: International Publication No. WO2018/110559
Patent Literature 4: International Publication No. WO2019/202933

Non-Patent Literatures

Non-Patent Literature 1: Matthew D. Oleksiak, Arian Ghorbanpour, Marlon T. Conato, B. Peter McGrail, Lars C. Grabow, Radha Kishan Motkuri, Jeffrey D. Rimer "Synthesis Strategies for Ultrastable Zeolite GIS Polymorphs as Sorbents for Selective Separations" Chem. Eur. J. 2016, 22, 16078-16088.
Non-Patent Literature 2: Pankaj Sharma, Jeong-gu Yeo, Moon Hee Han, Churl Hee Cho "Knobby surfaced, mesoporous, single-phase GIS-NaP1 zeolite microsphere synthesis and characterization for H2 gas adsorption" J. Mater. Chem. A, 2013, 1, 2602-2612.
Non-Patent Literature 3: Pankaj Sharma, Jeong-gu Yeo, Moon Hee Han, Churl Hee Cho "GIS-NaP1 zeolite microspheres as potential water adsorption material: Influence of initial silica concentration on adsorptive and physical/topological properties" Sci. Rep. 2016, 6, 1-26.
Non-Patent Literature 4: Arturo J. Hernandez-Maldonado, Ralph T. Yang, Daniel Chinn, Curtis L. Munson. "Partially Calcined Gismondine Type Silicoaluminophosphate SAPO-43: Isopropylamine Elimination and Separation of Carbon Dioxide, Hydrogen Sulfide, and Water" Langmuir 2003, 19, 2193-2200.
Non-Patent Literature 5: Johann Kecht, B. Mihailova, K. Karaghiosoff, S. Mintova, and Thomas Bein. "Nanosized Gismondine Grown in Colloidal Precursor Solutions" Langmuir 2004, 20, 5271-5276.

Non-Patent Literature 6: Ulf Hakansson, Lars Falth, Staffan Hansen "Structure of a High-Silica Variety of Zeolite Na-P" Acta Cryst. (1990). C46, 1363-1364.
Non-Patent Literature 7: Hyun June CHOI, Jung Gi Min, Sang Hyun Ahn, Jiho Shin, Suk Bong Hong, Sambhu Radhakrishnan, C. Vinod Chandran, Robert G. Bell, Eric Breynaert and Christine E. A. Kirschhock "Framework flexibility-driven CO2 adsorption on a zeolite" Mater. Horiz., 2020, 1528-1532.

Summary of Invention

Technical Problem

Focusing on the carbon dioxide adsorption ability of a GIS-type zeolite, for example, if carbon dioxide can be selectively removed from natural gas, industrial value thereof will be significant. If carbon dioxide can be selectively removed from exhaust gas from a power plant and/or a steel plant, the amount of emission of carbon dioxide can also be reduced.

In a case where carbon dioxide is separated, recovered, and purified with an adsorbing material, a pressure swing-type adsorption-separation method, a temperature swing-type adsorption-separation method, a pressure/temperature swing-type adsorption-separation method, or the like is used, and the adsorbing material is demanded to have performances including a large amount of adsorption of carbon dioxide, selective adsorption of carbon dioxide, a high selectivity against a gas subjected to separation, and no adsorption-desorption hysteresis of carbon dioxide. "Adsorption-desorption hysteresis" means a phenomenon in which a hysteresis in adsorption and desorption occurs in an adsorption-desorption isotherm of carbon dioxide, and it is important in use of an adsorbing material that the amount of adsorption in adsorption and the amount of desorption in reproduction be large in a step of desorbing/reproducing carbon dioxide by heating and/or vacuuming. An adsorption-desorption hysteresis leads to a decrease in amount of adsorption in adsorption and accordingly a decrease in amount of desorption in reproduction, and thus is hardly said to be a desirable characteristic in use as an adsorbing material.

Patent Literatures 1 to 2 have not mentioned any adsorption of carbon dioxide by zeolite, and it is hardly said according to the structure analysis results in such Literatures that a crystal structure necessary for selective adsorption of carbon dioxide is clearly formed. That is, it is considered that the zeolite described in Patent Literatures 1 to 2 is not sufficient in adsorption ability of carbon dioxide.

The zeolite described in Non-Patent Literatures 1 to 2 provides no adsorption of carbon dioxide, and cannot separate carbon dioxide from molecules larger in molecular size than carbon dioxide, such as oxygen, nitrogen, and methane, by adsorption and/or gas penetration. As the reason for this, it is considered that an 8-membered ring in GIS-type zeolite is distorted and has elliptical shape where the length of the longer axis is 4.5 Å and the length of the shorter axis is 3.1 Å, and a carbon dioxide molecule having an average molecular size of 3.3 Å cannot easily penetrate into a pore. Non-Patent Literature 3 discloses a GIS-type zeolite of silicoaluminophosphate, in which the binding distance and the binding angle are different from those of silica-alumina, thus the 8-membered ring pore is slightly large and adsorption of carbon dioxide is observed, but the amount of adsorption cannot be said to be sufficiently high, adsorption of oxygen, nitrogen, and methane cannot be said to be sufficiently less, and the selectivity is lowered in separation from carbon dioxide. With reference to Non-Patent Literatures 5 and 6, it has been found according to analysis of a zeolite synthesized according to the descriptions of Patent Literatures 5 and 6, as made by the present inventor, that no formation of any suitable structure can be observed in 29Si-NMR and no carbon dioxide adsorption performance of a GIS-type zeolite can be exhibited.

Meanwhile, Patent Literatures 3 and 4 provide GIS-type zeolites respectively having amounts of adsorption of carbon dioxide of up to 52.4 cc/g and 67.5 cc/g by optimization of crystal structures of the GIS-type zeolites, but such amounts are hardly said to be sufficient from the viewpoint of gas separation recovery and these Literatures have not mentioned any adsorption-desorption hysteresis. Non-Patent Literature 7 shows a GIS-type zeolite in which a cation in the zeolite is substituted with any of Li, Na, K, Rb and Cs, and provides a GIS-type zeolite having an amount of adsorption of carbon dioxide of up to 82.9 cc/g, but an adsorption-desorption hysteresis is observed in an adsorption-desorption isotherm of carbon dioxide.

The present invention has been made in view of the above circumstances, and an object thereof is to provide a GIS-type zeolite, an adsorbing material, and a separation method, in which an adsorption-desorption hysteresis is small in an adsorption-desorption isotherm of carbon dioxide.

Solution to Problem

The present inventors have made intensive studies in order to solve the above problems, and as a result, have found that the above problems can be solved in a case where the silica/alumina ratio of a GIS-type zeolite is within a predetermined range and the spectral full width at half maximum in a spectrum obtained by subjecting the zeolite to

$^{27}$Al-MAS-NMR measurement is within a predetermined value range, leading to completion of the present invention.

Thus, the present invention is as follows.

[1] A GIS-type zeolite, having a silica/alumina ratio of 0.87 or more, wherein
when a full width at half maximum of a peak derived from Al in a framework of the zeolite, observed in a $^{27}$Al-MAS-NMR spectrum, is defined as A, A $\leq$ 5.6 ppm is satisfied.
[2] The GIS-type zeolite according to [1], including potassium as cationic species in the zeolite.
[3] The GIS-type zeolite according to [2], wherein a ratio (K/Al) of an atomic percentage of potassium to an atomic percentage of aluminum in the zeolite is 0.05 or more.
[4] The GIS-type zeolite according to any of [1] to [3], wherein a ratio (Z/T) of a total value (Z) of amount of substance of potassium and lithium to a total value (T) of amount of substance of alkali metals in the zeolite is 0.05 or more.
[5] The GIS-type zeolite according to any of [1] to [4], having a carbon atom content of 4% by mass or less.
[6] The GIS-type zeolite according to any of [1] to [5], including silica-alumina.
[7] An adsorbing material including the GIS-type zeolite according to any of [1] to [6].
[8] A separation method including separating one or more selected from the group consisting of $CO_2$, $H_2O$, He, Ne, $Cl_2$, $NH_3$, and HCl from a mixture including two or more gases selected from the group consisting of $H_2$, $N_2$, $O_2$, Ar, CO, and hydrocarbon, by use of the adsorbing material according to [7].
[9] The separation method according to [8], wherein the gas separation is performed by a pressure swing-type adsorption-separation method, a temperature swing-type adsorption-separation method, or a pressure/temperature swing-type adsorption-separation method.

Advantageous Effect of Invention

The present invention can provide a GIS-type zeolite, an adsorbing material, and a separation method, in which an adsorption-desorption hysteresis is small in an adsorption-desorption isotherm of carbon dioxide.

Brief Description of Drawings

[Figure 1] Figure 1 is $^{27}$Al-MAS-NMR diagram of a GIS-type zeolite obtained in Example 1.
[Figure 2] Figure 2 illustrates a diagram of an adsorption isotherm and a desorption isotherm of carbon dioxide of a GIS-type zeolite obtained in Comparative Example 1.
[Figure 3] Figure 3 is a view exemplifying an adsorbing material according to one embodiment of the present invention.

Description of Embodiments

Hereinafter, an embodiment for carrying out the present invention (hereinafter, referred to as "the present embodiment".) will be described in detail. The present invention is not limited to the following description, and can be variously modified and carried out within the gist thereof.
The GIS-type zeolite of the present embodiment has a silica/alumina ratio of 0.87 or more, in which, when the full width at half maximum of a peak derived from Al in a framework of the zeolite, observed in a $^{27}$Al-MAS-NMR spectrum, is defined as A, A $\leq$ 5.6 ppm is satisfied. The GIS-type zeolite exhibits a small adsorption-desorption hysteresis in an adsorption-desorption isotherm of carbon dioxide. The GIS-type zeolite exhibits a sufficiently large amount of adsorption of carbon dioxide.
The present embodiment can provide a GIS-type zeolite in which the binding mode of Al present in a zeolite framework is controlled to allow for a small adsorption-desorption hysteresis in an adsorption-desorption isotherm of carbon dioxide and furthermore a sufficiently large amount of adsorption of carbon dioxide. The binding modes of Al have an influence on the change in structure of the zeolite framework itself in adsorption-desorption. For example, if the change in structure due to adsorption of an adsorbate occurs, energy is taken for the change in structure itself in adsorption and an adsorption-desorption hysteresis is observed. If the change in structure is too poor, a sufficient space, where an adsorbate can adsorb, cannot be obtained and thus the amount of adsorption is smaller. Furthermore, the change in structure also has an influence on pores, and thus also contributes to selectivity in separation of carbon dioxide and gaseous species such as nitrogen and methane.
The binding mode of Al in the zeolite framework of the GIS-type zeolite of the present embodiment can be controlled to allow for a small adsorption-desorption hysteresis in an adsorption-desorption isotherm of carbon dioxide. Specifically, when the full width at half maximum of a peak derived from Al in the framework of the zeolite, observed in a chemical shift region of 50 ppm to 70 ppm in an NMR spectrum obtained by measurement with $^{27}$Al-MAS-NMR, is

defined as A, A ≤ 5.6 ppm is preferably satisfied, 0.8 ppm ≤ A ≤ 5.4 ppm is more preferably satisfied, and 1.1 ppm ≤ A ≤ 3.9 ppm is further preferably satisfied. The full width A at half maximum of a peak observed by $^{27}$Al-MAS-NMR indicates a distribution of the binding mode of Al and the distribution of the binding mode of Al present in the zeolite framework has an influence on the change in structure of the zeolite framework itself at each time of adsorption and desorption, and thus the full width A at half maximum, representing the distribution of the binding mode of Al, can be within an appropriate range to eliminate an adsorption-desorption hysteresis in an adsorption-desorption isotherm. The full width A at half maximum of a peak observed by $^{27}$Al-MAS-NMR is expressed by A = |X2 - X1|, in which the half values of the height (local maximum value) of a peak top in an Al-NMR spectrum subjected to baseline correction are shown at a spectral position X1 and a spectral position X2 respectively at the higher magnetic field side and at the lower magnetic field side.

In the present embodiment, the GIS-type zeolite is preferably silica-alumina from the viewpoint of a more enhancement in selective adsorption ability of carbon dioxide.

The silica/alumina ratio (which represents the molar ratio of silica and alumina, represented by $SiO_2/Al_2O_3$, and which is hereinafter also referred to as "SAR") in the GIS-type zeolite according to the present embodiment is 0.87 or more. As the SAR is lower, the zeolite is more hydrophilic and has a stronger adsorption force of a polar molecule such as carbon dioxide. A higher SAR is more preferred because a lower SAR causes a so strong adsorption force that energy necessary for desorption by heating or vacuuming is larger. The SAR is more preferably 1.50 or more, further preferably 3.40 or more. While the upper limit of the SAR is not particularly limited, a too high SAR leads to small interaction with an adsorbate and thus the SAR is preferably 3000 or less, more preferably 500 or less, further preferably 100 or less. The SAR can be calculated from the area intensities in a spectrum obtained by $^{29}$Si-MAS-NMR measurement of the zeolite. The method for measuring the SAR is more specifically a method shown in Examples.

While the SAR is preferably higher from the viewpoint of the amount of adsorption of carbon dioxide, it is established that, when the SAR in the GIS-type zeolite is higher, an adsorption-desorption hysteresis in an adsorption-desorption isotherm of carbon dioxide is enhanced. The full width A at half maximum in the present embodiment can be within a predetermined range to result in not only a larger amount of adsorption of carbon dioxide, but also a reduced adsorption-desorption hysteresis.

While an organic structure-directing material can be used during synthesis in the GIS-type zeolite of the present embodiment, such an organic structure-directing material may remain in pores and fill space into which carbon dioxide enters, thereby causing the amount of adsorption of carbon dioxide to be smaller, and thus is preferably used in a smaller amount. The amount of the organic structure-directing material or an altered substance thereof is quantitatively determined by measurement of the amount of carbon atoms. The carbon atom content is preferably 4% by mass or less, more preferably 3% by mass or less, further preferably 2% by mass or less.

The cationic species contained in the GIS-type zeolite is preferably potassium or lithium, more preferably potassium, from the viewpoint of an enhancement in selective adsorption ability of carbon dioxide. The total content of potassium and lithium in the zeolite is calculated as the ratio (Z/T) of the total value (Z) of the amount of substance of potassium and lithium to the total value (T) of the amount of substance of alkali metals in the GIS-type zeolite. The Z/T is preferably 0.05 or more, more preferably 0.10 or more, further preferably 0.15 or more. The upper limit of the Z/T is not particularly limited, and the Z/T may be 1.00 or less. The Z/T can be measured by thermally dissolving the zeolite in an aqueous sodium hydroxide solution or aqua regia, appropriately diluting the resultant to provide a liquid, and subjecting the liquid to ICP-emission spectrochemical analysis. The Z/T can be more specifically measured by a method described in Examples below. The Z/T can be adjusted by changing the proportions of potassium and lithium as cationic species of the GIS-type zeolite.

The ratio (K/T) of the total value (K) of the amount of substance of potassium to the total value (T) of the amount of substance of alkali metals in the GIS-type zeolite is preferably 0.05 or more, more preferably 0.10 or more, further preferably 0.15 or more. The upper limit of the K/T is not particularly limited and the K/T may be 1.00 or less.

The cationic species contained in the zeolite is preferably potassium from the viewpoint of an enhancement in selective adsorption ability of carbon dioxide. The content of potassium in the zeolite is calculated as the ratio (K/Al) of the atomic percentage of potassium to the atomic percentage of aluminum. The ratio (K/Al) of the atomic percentage of potassium to the atomic percentage of aluminum in the zeolite is preferably 0.05 or more, more preferably 0.10 or more, further preferably 0.15 or more. While the upper limit of the K/Al is not particularly limited, the K/Al, if exceeds 1.00, causes the presence of excess K ion species, and thus the ratio (K/Al) of the atomic percentage of potassium to the atomic percentage of aluminum in the zeolite is preferably 2.00 or less, preferably 1.50 or less, further preferably 1.00 or less.

The carbon atom content, the potassium atom content, the SAR, and the $^{27}$Al-MAS-NMR spectrum can be measured by a method described in Examples below. In addition, these can be adjusted within the above ranges by, for example, adjusting synthesis conditions of the GIS-type zeolite within preferable ranges described below.

(Synthesis method)

A method for producing the GIS-type zeolite according to the present embodiment may include, for example, a step of preparing a mixed gel containing a silica source including silicon, an aluminum source including aluminum, an alkali metal source/alkaline earth metal source including at least one selected from an alkali metal (M1) and an alkaline earth metal (M2), an alkali source, a phosphorus source including phosphorus, an organic structure-directing agent and water. Hereinafter, the mixed gel and each component included therein will be described.

[Mixed gel]

The mixed gel in the present embodiment is a mixture including a silica source, an aluminum source, an alkali metal source/alkaline earth metal source, and water as components, and including, if necessary, an alkali source, a phosphorus source, and an organic structure-directing agent.

The silica source refers to a component in the mixed gel, serving as a starting material of silicon included in a zeolite produced from the mixed gel, the aluminum source refers to a component in the mixed gel, serving as a starting material of aluminum included in a zeolite produced from the mixed gel, the alkali metal source/alkaline earth metal source refers to a component in the mixed gel, serving as starting material(s) of an alkali metal and/or an alkaline earth metal, the alkali source refers to a component used for the purpose of adjusting alkalinity (pH) in the mixed gel, and the phosphorus source refers to a component in the mixed gel, serving as a starting material of phosphorus included in a zeolite produced from the mixed gel.

[Silica source]

The silica source is not particularly limited as long as it is one commonly used, and examples thereof include crystalline silica, amorphous silica, silicic acid, silicate and an organosilicate compound. More specific examples thereof include sodium silicate, potassium silicate, calcium silicate, magnesium silicate, fumed silica, precipitated silica, silica gel, colloidal silica, aluminosilicate, tetraethoxysilane (TEOS) and trimethylethoxysilane. These compounds may be used singly or in combinations of a plurality thereof. Here, aluminosilicate serves as the silica source and also serves as the aluminum source.

Among them, fumed silica, colloidal silica, or precipitated silica is preferable from the viewpoint that a zeolite high in the degree of crystallinity tends to be obtained.

[Aluminum source]

The aluminum source is not particularly limited as long as it is one commonly used, and specific examples thereof include, sodium aluminate, aluminum sulfate, aluminum nitrate, aluminum acetate, aluminum hydroxide, aluminum oxide, aluminum chloride, aluminum alkoxide, metallic aluminum and amorphous aluminosilicate gel. These compounds may be used singly or in combinations of a plurality thereof.

Among them, sodium aluminate, aluminum sulfate, aluminum nitrate, aluminum acetate, aluminum hydroxide, aluminum chloride or aluminum alkoxide is preferable from the viewpoint that a zeolite high in the degree of crystallinity tends to be obtained. From the same viewpoint, sodium aluminate or aluminum hydroxide is more preferable, and sodium aluminate is further preferable.

[Alkali metal source/alkaline earth metal source]

The types of the alkali metal/alkaline earth metal in the alkali metal source/alkaline earth metal source are not particularly limited, and any alkali metal compound and/or any alkaline earth metal compound can be used.

Examples of the alkali metal source/alkaline earth metal source include, but not limited to the following, hydroxide, hydrogen carbonate, carbonate, acetate, sulfate and nitrate of the alkali metal or alkaline earth metal. These compounds may be used singly or in combinations of a plurality thereof.

The alkali metal and the alkaline earth metal for use in the alkali source can be usually Li, Na, K, Rb, Cs, Ca, Mg, Sr, Ba or the like. Na or K is preferable and Na is more preferable from the viewpoint of more facilitating crystal formation of the GIS-type framework. The alkali metal and the alkaline earth metal for use in the alkali metal source/alkaline earth metal source may be used singly or in combinations of a plurality thereof.

Specific examples of the alkali source include, but not limited to the following,

sodium sulfate, sodium sulfite, sodium thiosulfate, sodium nitrite, sodium nitrate, sodium carbonate, sodium hydrogen carbonate, sodium phosphate, sodium acetate, sodium formate, sodium citrate, sodium oxalate, sodium fluoride, sodium chloride, sodium bromide, sodium iodide, thiosodium, sodium silicate, sodium metasilicate, sodium tetraborate, sodium chlorate, sodium perchlorate, sodium cyanide, sodium metastannate, sodium hexahydroxidostannate(IV), sodium hexacyanidoferrate(II), sodium permaganate, sodium chromate and sodium dichromate,

potassium sulfate, potassium sulfite, potassium thiosulfate, potassium nitrite, potassium nitrate, potassium carbonate, potassium hydrogen carbonate, potassium phosphate, potassium acetate, potassium formate, potassium citrate, potassium oxalate, potassium fluoride, potassium chloride, potassium bromide, potassium iodide, thiopotassium, potassium silicate, potassium metasilicate, potassium tetraborate, potassium chlorate, potassium perchlorate, potassium cyanide, potassium metastannate, potassium hexahydroxidostannate(IV), potassium hexacyanidoferrate(II), potassium permaganate, potassium chromate and potassium dichromate,

lithium sulfate, lithium sulfite, lithium thiosulfate, lithium nitrite, lithium nitrate, lithium carbonate, lithium hydrogen carbonate, lithium phosphate, lithium acetate, lithium formate, lithium citrate, lithium oxalate, lithium fluoride, lithium chloride, lithium bromide, lithium iodide, thiolithium, lithium silicate, lithium metasilicate, lithium tetraborate, lithium chlorate, lithium perchlorate, lithium cyanide, lithium metastannate, lithium hexahydroxidostannate(IV), lithium hexacyanidoferrate(II), lithium permaganate, lithium chromate and lithium dichromate,

rubidium sulfate, rubidium sulfite, rubidium thiosulfate, rubidium nitrite, rubidium nitrate, rubidium carbonate, rubidium hydrogen carbonate, rubidium phosphate, rubidium acetate, rubidium formate, rubidium citrate, rubidium oxalate, rubidium fluoride, rubidium chloride, rubidium bromide, rubidium iodide, thiorubidium, rubidium silicate, rubidium metasilicate, rubidium tetraborate, rubidium chlorate, rubidium perchlorate, rubidium cyanide, rubidium metastannate, rubidium hexahydroxidostannate(IV), rubidium hexacyanidoferrate(II), rubidium permaganate, rubidium chromate and rubidium dichromate,

cesium sulfate, cesium sulfite, cesium thiosulfate, cesium nitrite, cesium nitrate, cesium carbonate, cesium hydrogen carbonate, cesium phosphate, cesium acetate, cesium formate, cesium citrate, cesium oxalate, cesium fluoride, cesium chloride, cesium bromide, cesium iodide, thiocesium, cesium silicate, cesium metasilicate, cesium tetraborate, cesium chlorate, cesium perchlorate, cesium cyanide, cesium metastannate, cesium hexahydroxidostannate(IV), cesium hexacyanidoferrate(II), cesium permaganate, cesium chromate and cesium dichromate,

magnesium sulfate, magnesium sulfite, magnesium thiosulfate, magnesium nitrite, magnesium nitrate, magnesium carbonate, magnesium hydrogen carbonate, magnesium phosphate, magnesium acetate, magnesium formate, magnesium citrate, magnesium oxalate, magnesium fluoride, magnesium chloride, magnesium bromide, magnesium iodide, thiomagnesium, magnesium silicate, magnesium metasilicate, magnesium tetraborate, magnesium chlorate, magnesium perchlorate, magnesium cyanide, magnesium metastannate, magnesium hexahydroxidostannate(IV), magnesium hexacyanidoferrate(II), magnesium permaganate, magnesium chromate and magnesium dichromate,

calcium sulfate, calcium sulfite, calcium thiosulfate, calcium nitrite, calcium nitrate, calcium carbonate, calcium hydrogen carbonate, calcium phosphate, calcium acetate, calcium formate, calcium citrate, calcium oxalate, calcium fluoride, calcium chloride, calcium bromide, calcium iodide, thiocalcium, calcium silicate, calcium metasilicate, calcium tetraborate, calcium chlorate, calcium perchlorate, calcium cyanide, calcium metastannate, calcium hexahydroxidostannate(IV), calcium hexacyanidoferrate(II), calcium permaganate, calcium chromate and calcium dichromate,

strontium sulfate, strontium sulfite, strontium thiosulfate, strontium nitrite, strontium nitrate, strontium carbonate, strontium hydrogen carbonate, strontium phosphate, strontium acetate, strontium formate, strontium citrate, strontium oxalate, strontium fluoride, strontium chloride, strontium bromide, strontium iodide, thiostrontium, strontium silicate, strontium metasilicate, strontium tetraborate, strontium chlorate, strontium perchlorate, strontium cyanide, strontium metastannate, strontium hexahydroxidostannate(IV), strontium hexacyanidoferrate(II), strontium permaganate, strontium chromate and strontium dichromate,

barium sulfate, barium sulfite, barium thiosulfate, barium nitrite, barium nitrate, barium carbonate, barium hydrogen carbonate, barium phosphate, barium acetate, barium formate, barium citrate, barium oxalate, barium fluoride, barium chloride, barium bromide, barium iodide, thiobarium, barium silicate, barium metasilicate, barium tetraborate, barium chlorate, barium perchlorate, barium cyanide, barium metastannate, barium hexahydroxidostannate(IV), barium hexacyanidoferrate(II), barium permaganate, barium chromate and barium dichromate.

[Alkali source]

The alkali source is used for the purpose of adjusting the alkalinity (pH) in the mixed gel in order to promote crystallization to a zeolite structure in the case of zeolite production. The alkali used may be any compound exhibiting alkalinity, may be either an inorganic compound or an organic compound, and is preferably an inorganic compound in terms of cost, and more preferable examples thereof include alkali metal hydroxide. Examples of the alkali metal hydroxide include lithium hydroxide, sodium hydroxide, potassium hydroxide, rubidium hydroxide and cesium hydroxide, preferably include sodium hydroxide and potassium hydroxide, more preferably include sodium hydroxide. These compounds may be used singly or in combinations of a plurality thereof.

The phosphorus source is not particularly limited as long as it is one commonly used, and specific examples thereof include an aqueous phosphoric acid solution, sodium phosphate, aluminum phosphate, potassium phosphate, lithium phosphate, calcium phosphate and barium phosphate. These compounds may be used singly or in combinations of a plurality thereof.

Among them, an aqueous phosphoric acid solution, sodium phosphate or aluminum phosphate is preferable. From the same viewpoint, an aqueous phosphoric acid solution or sodium phosphate is more preferable and an aqueous phosphoric acid solution is further preferable from the viewpoint that a zeolite high in the degree of crystallinity tends to be obtained.

[Organic structure-directing agent]

The organic structure-directing agent in the case of zeolite production by hydrothermal synthesis of the mixed gel is a compound acting as promoting crystallization to a zeolite structure. In zeolite crystallization, the organic structure-directing agent can be, if necessary, used.

Any organic structure-directing agent may be adopted as the organic structure-directing agent without any limitation in terms of the type as long as it can form a desired GIS-type zeolite. The organic structure-directing agent may be used singly or in combinations of a plurality thereof.

As the organic structure-directing agent, without limitation to the following, for example, any of amines, quaternary ammonium salts, alcohols, ethers, amides, alkyl ureas, alkyl thioureas, cyanoalkanes, and alicyclic heterocyclic compounds including nitrogen as a hetero atom can be used, and alkylamines are preferably used and isopropylamine is more preferably used.

Such salts may have an anion. Representative examples of such an anion include, but not limited to the following, a halogen ion such as Cl$^-$, Br$^-$ and I$^-$, a hydroxide ion, an acetate ion, a sulfate ion, a nitrate ion, a carbonate ion, and a hydrogen carbonate ion. Among them, a halogen ion or a hydroxide ion is preferable and a halogen ion is more preferable from the viewpoint of more facilitating crystal formation of the GIS-type framework.

[Compositional ratio of mixed-gel]

In the present embodiment, it is important for synthesis of a GIS-type zeolite having an appropriate structure to select the silica source. Since a dissolution behavior of the silica source at the initial stage of reaction has a large effect on the binding mode of Al in the zeolite framework, an appropriate silica source is needed to be selected depending on the composition of the mixed gel. A dissolution behavior of the silica source at the initial stage of reaction also depends on the amounts of the alkali metal/alkaline earth metal contained in the silica source itself, and the ratio of the amounts of the alkali metal/alkaline earth metal and $SiO_2$ included in the silica source itself is represented by the molar ratio of the sum of $L1_2O$ and $L2O$ to $SiO_2$, namely, $(L1_2O+L2O)/SiO_2$ (wherein L1 and L2 respectively represent the alkali metal and the alkaline earth metal contained in the silica source, and these are each calculated in terms of oxide.).

Even when a plurality of such silica sources is used, the ratio of the molar amount of the sum of the amounts of the alkali metal/alkaline earth metal and the molar amount of the sum of $SiO_2$ included in the plurality of such silica sources themselves may be considered. The ratio $(L1_2O+L2O)/SiO_2$ of the amounts of the alkali metal/alkaline earth metal and $SiO_2$ included in such silica sources themselves is preferably 0.30 or less, more preferably 0.25 or less, further preferably 0.08 or less from the viewpoint of selection of an appropriate silica source and a dissolution behavior of such a silica source at the initial stage of reaction.

The ratio of the amounts of the alkali metal/alkaline earth metal and OH- in the mixed gel is most important for synthesis of a GIS-type zeolite having an appropriate structure. The ratio of the amounts of the alkali metal/alkaline earth metal and OH- in the mixed gel is represented as OH$^-$ to the molar ratio of the sum of $M1_2O$ and $M2O$, namely, $OH^-/(M1_2O+M2O)$ (wherein M1 represents the alkali metal and M2 represents the alkaline earth metal, and these are each calculated in terms of oxide.). "OH$^-$" is OH$^-$ derived from an inorganic hydroxide such as NaOH or $Ca(OH)_2$, or an organic hydroxide such as tetraethylammonium hydroxide, and does not encompass one represented as an oxide such as sodium aluminate or sodium silicate, and OH$^-$ discharged in dissolution of the hydrate in water.

The zeolite is produced with the silica source and the aluminum source dissolved in a water solvent being dissolved and also reacted and thus crystallized, and the ratio of the amounts of the alkali metal/alkaline earth metal and OH- in the mixed gel can be within an appropriate range to allow for control of the binding mode of Al in the zeolite framework and synthesis of a GIS-type zeolite having an ideal crystal structure. The ratio $OH/(M1_2O + M2O)$ of the amounts of the alkali metal/alkaline earth metal and OH- is preferably 0.20 or less, more preferably 0.16 or less, further preferably 0.10 or less from the viewpoint of formation of a crystal having an ideal GIS-type framework.

The ratio between the silica source and the aluminum source in the mixed gel is represented as the molar ratio of the oxides of the corresponding elements, namely, $SiO_2/Al_2O_3$. (Herein, the ratio in the zeolite synthesized and the silica/alumina ratio in the mixed gel are not matched. The silica/alumina ratio in the zeolite synthesized is determined depending on other compositional and synthesis conditions.) The $SiO_2/Al_2O_3$ in the mixed gel is not particularly limited as long as zeolite can be formed, and is preferably 3.0 or more and 70.0 or less, more preferably 3.5 or more and 65.0 or less, further preferably 4.0 or more and 60.0 or less because formation of a zeolite having a framework different from the GIS-type framework can be suppressed.

A high ratio of water and alumina ($H_2O/Al_2O_3$) tends to allow components in the mixed gel to be easily dispersed more uniformly, but a too high ratio thereof tends to cause the rate of crystallization to be extremely reduced. Accordingly, such tendencies have any effect on the equilibrium of crystallization and redissolution, and thus control of $H_2O/Al_2O_3$ is needed to be optimized in order to synthesize a GIS-type zeolite having an optimal crystal structure.

From the above viewpoint, $H_2O/Al_2O_3$ is preferably $210 \leq H_2O/Al_2O_3 \leq 780$, more preferably $220 \leq H_2O/Al_2O_3 \leq 778$, further preferably $230 \leq H_2O/Al_2O_3 \leq 775$.

The ratio between the phosphorus source and the aluminum source in the mixed gel is represented as the molar ratio of the oxides of the corresponding elements, namely, $P_2O_5/Al_2O_3$. The ratio $P_2O_5/Al_2O_3$ is not particularly limited as long as zeolite can be formed, and the ratio is preferably less than 1.0, more preferably 0.6 or less, further preferably 0.4 or less, particularly preferably 0 because formation of a zeolite having a framework different from the GIS-type framework tends to be able to be suppressed.

When the organic structure-directing agent is included in the mixed gel, the ratio between the aluminum source and the organic structure-directing agent is represented by the molar ratio of the organic structure-directing agent to $Al_2O_3$, namely, $R/Al_2O_3$ (wherein R represents the organic structure-directing agent). The ratio is preferably less than 7.0, more preferably 6.0 or less, further preferably 5.0 or less from the viewpoint of more facilitating crystal formation of the GIS-type framework and/or decreasing the synthesis period to allow economic efficiency in zeolite production to be excellent. When the organic structure-directing agent is used, the zeolite organic structure-directing agent remains in a zeolite pore and carbon dioxide cannot enter into the pore, resulting in a decrease in amount of adsorption. While heating to at least 400°C or more is required in order to remove the organic structure-directing agent, a crystal of the GIS-type zeolite is collapsed at 350°C or more and thus is amorphous, and thus the amount of the organic structure-directing agent is preferably small. From this viewpoint, $R/Al_2O_3$ is preferably 4.0 or less, more preferably 3.5 or less, further preferably 3.0 or less.

As described above, the method for producing the GIS-type zeolite of the present embodiment includes a step of preparing a mixed gel containing a silica source including silicon, an aluminum source including aluminum, an alkali metal/alkaline earth metal source, an alkali source, a phosphorus source, and water, wherein, when the molar ratios of components in the mixed gel are calculated in terms of oxides of corresponding elements with respect to the silicon, the aluminum, the alkali metal (M1) and the alkaline earth metal (M2), the alkali metal (L1) and the alkaline earth metal (L2) contained in the silica source, and the phosphorus source, the molar ratios $\alpha$, $\beta$, $\gamma$, $\delta$ and $\varepsilon$ represented by the following expressions (1), (2), (3), (4), (5) and (6) preferably satisfy $\alpha \leq 0.30$, $\beta \leq 0.20$, $3.0 \leq \gamma \leq 70.0$, $210 \leq \delta \leq 780$ and $0 \leq \varepsilon < 1.0$, more preferably satisfy $\alpha \leq 0.25$, $\beta \leq 0.16$, $3.5 \leq \gamma \leq 65.0$, $220 \leq \delta \leq 778$ and $0 \leq \varepsilon \leq 0.6$, further preferably satisfy $\alpha \leq 0.08$, $\beta \leq 0.10$, $4.0 \leq \gamma \leq 60.0$, $230 \leq \delta \leq 775$ and $0 \leq \varepsilon \leq 0.4$. The GIS-type zeolite according to the present embodiment is particularly preferably one obtained by the above method for producing the GIS-type zeolite of the present embodiment.

$$\alpha \ = \ (L1_2O \ + \ L2O)/SiO_2 \quad (1)$$

$$\beta \ = \ OH^-/(M1_2O \ + \ M2O) \quad (2)$$

$$\gamma \ = \ SiO_2/Al_2O_3 \quad (3)$$

$$\delta \ = \ H_2O/Al_2O_3 \quad (4)$$

$$\varepsilon \ = \ P_2O_5/Al_2O_3 \quad (5)$$

Furthermore, in the method for producing a GIS-type zeolite according to the present embodiment, preferably, the molar ratios $\alpha$, $\beta$, $\gamma$, $\delta$ and $\varepsilon$ satisfy the above ranges, and when the mixed gel further includes an organic structure-directing agent R, the molar ratio $\xi$ represented by the following expression (6) preferably satisfies $\xi \leq 4$.

$$\xi \ = \ R/Al_2O_3 \quad (6)$$

Although a seed crystal is not necessarily needed to be present in the mixed gel, a GIS-type zeolite produced in advance can also be added as a seed crystal to the mixed gel, to provide the GIS-type zeolite of the present embodiment.

[Step of preparing mixed gel]

The step of preparing a mixed gel is not particularly limited, and may include, for example, a mixing step of mixing a silica source, an aluminum source, an alkali metal source/alkaline earth metal source, water, and, if necessary, an alkali source, a phosphorus source, and an organic structure-directing agent at one time or at multiple stages, and an aging step of the mixture obtained in the mixing step.

The mixing step can mix components including the silica source, the aluminum source, the alkali metal source/alkaline earth metal source, water, and, if necessary, the alkali source, the phosphorus source, the organic structure-directing agent at one time or at multiple stages.

The order in mixing at multiple stages is not limited, and may be appropriately selected depending on conditions used. The mixing at multiple stages may be performed either with stirring or without stirring. In stirring, a stirring method commonly used is adopted without any particular limitation, and specific examples include methods using blade stirring, vibration stirring, oscillation stirring, and centrifugation stirring, and the like.

The rotational speed in stirring is not particularly limited as long as it is a stirring speed commonly used, and is, for example, 1 rpm or more and less than 2000 rpm.

The temperature in the mixing step is not particularly limited as long as it is a temperature commonly used, and is, for example, -20°C or more and less than 80°C.

The period for the mixing step is not particularly limited and can be appropriately selected depending on the temperature in the mixing step, and is, for example, more than 0 minutes and 1000 hours or less.

The aging step may be performed with either standing or stirring. In stirring in the aging step, a stirring method commonly used is adopted without any particular limitation, and specific examples include methods using blade stirring, vibration stirring, oscillation stirring, and centrifugation stirring.

The rotational speed in stirring is not particularly limited as long as it is a stirring speed commonly used, and is, for example, 1 rpm or more and less than 2000 rpm.

The temperature in the aging step is not particularly limited as long as it is a temperature commonly used, and is, for example, -20°C or more and less than 80°C.

The period for the aging step is not particularly limited, can be appropriately selected depending on the temperature in the aging step, and is, for example, more than 0 minutes and 1000 hours or less.

It is considered in zeolite production that dissolution of starting materials and production and redissolution of a zeolite precursor occur in the mixing step and the aging step of starting materials. In order to form a large periodic structure including an 8-membered ring without the occurrence of defects and the like, it is preferable not to allow formation of a zeolite precursor to excessively progress. When formation of a zeolite precursor excessively progresses, it is preferable not to excessively age such a precursor because generation of an ANA-type zeolite having a more stable structure tends to be increased. On the other hand, starting materials are preferably sufficiently mixed to provide a uniform starting material gel. The total period for the mixing step and the aging step combined may be appropriately adjusted based on the composition of starting materials, and the like in order to obtain a zeolite having a proper structure, and is not particularly limited. The period is typically preferably 1 minute or more and less than 24 hours, more preferably 3 minutes or more and less than 23 hours, further preferably 10 minutes or more and 18 hours or less, still further preferably 12 minutes or more and 15 hours or less, furthermore preferably 20 minutes or more and 6 hours or less.

[Hydrothermal synthesis step]

The method for producing a GIS-type zeolite according to the present embodiment preferably further includes a hydrothermal synthesis step where the hydrothermal synthesis temperature is 80°C to 200°C, and the hydrothermal synthesis temperature is more preferably 100°C to 180°C. That is, the mixed gel obtained in the preparation step is preferably subjected to hydrothermal synthesis with being kept at a predetermined temperature for a predetermined period with stirring or standing.

The temperature in the hydrothermal synthesis is not particularly limited as long as it is a temperature commonly used, and it is preferably 80°C or more from the viewpoint of decreasing the synthesis period to allow economic efficiency in zeolite production to be excellent. The temperature is more preferably 90°C or more, further preferably 100°C or more from the viewpoint that formation of a zeolite having a framework different from the GIS-type framework can be suppressed. The temperature is more preferably 200°C or less, further preferably 180°C or less, further preferably 170°C or less from the viewpoint that formation of a zeolite having a framework different from the GIS-type framework can be suppressed. The temperature in the hydrothermal synthesis may be constant or may be changed stepwise.

The period for the hydrothermal synthesis is not particularly limited as long as it is a period commonly used, and can be appropriately selected depending on the temperature in the hydrothermal synthesis. The period for the hydrothermal synthesis is preferably 3 hours or more, more preferably 10 hours or more from the viewpoint that the GIS framework is formed. The period is further preferably 24 hours or more from the viewpoint that a GIS-type zeolite high in crystallinity is obtained. The period for the hydrothermal synthesis is preferably 30 days or less, more preferably 20 days or less, further preferably 10 days or less from the viewpoint of allowing the economic efficiency in zeolite production to be excellent.

The container to which the mixed gel is loaded in the hydrothermal synthesis step is not particularly limited as long as it is a container commonly used, and when the pressure in the container is increased at a predetermined temperature or is gas pressure not inhibiting crystallization, the mixed gel is preferably loaded in a pressure-resistant container and subjected to the hydrothermal synthesis. The pressure-resistant container is not particularly limited, and a pressure-resistant container having any of various shapes such as spherical, longitudinally elongated, and horizontally elongated shapes can be used.

When the mixed gel in the pressure-resistant container is stirred, the pressure-resistant container is rotated vertically and/or laterally, preferably rotated vertically. When the pressure-resistant container is rotated vertically, the rotational speed is not particularly limited as long as it is within a range commonly used, and it is preferably 1 to 50 rpm, more preferably 10 to 40 rpm.

In the hydrothermal synthesis step, examples of preferable stirring of the mixed gel include a method including using a pressure-resistant container having a longitudinally elongated shape and vertically rotating it.

[Separation/drying step]

After the hydrothermal synthesis step, the solid as the product and the liquid including water are separated, and the separation method is not particularly limited as long as it is a common method. Filtration, decantation, a spray-drying method (rotary atomization, nozzle atomization, ultrasonic atomization or the like), a drying method using a rotary evaporator, a vacuum drying method, a freeze-drying method, a natural drying method, or the like can be used, and separation can be usually made by filtration or decantation.

The resultant from separation may be used as it is, or may be washed with water or a predetermined solvent. The resultant from separation can be, if necessary, dried. The temperature at which the resultant from separation is dried is not particularly limited as long as it is a common drying temperature, and it is usually from room temperature to 150°C or less. The atmosphere during drying is not particularly limited as long as it is an atmosphere commonly used, and an air atmosphere, or an atmosphere to which an inert gas such as nitrogen or argon, or oxygen is added is usually used.

[Calcining step]

A GIS-type zeolite, if necessary, calcined can be used. The calcining temperature is not particularly limited as long as it is a temperature commonly used, and it is preferably 300°C or more, more preferably 350°C or more from the viewpoint that, when the organic structure-directing agent is desired to be removed, the proportion thereof remaining can be decreased. The temperature is further preferably 360°C or more from the viewpoint that the calcining period is decreased to allow the economic efficiency in zeolite production to be excellent. The temperature is preferably less than 450°C, more preferably 420°C or less, further preferably 400°C or less because crystallinity of zeolite tends to be retained.

The calcining period is not particularly limited as long as it is a period where the organic structure-directing agent is sufficiently removed, and it can be appropriately selected depending on the calcining temperature and is preferably 0.5 hours or more, more preferably 1 hour or more, further preferably 3 hours or more because the proportion of the remaining organic structure-directing agent tends to be able to be decreased. The calcining period is preferably 10 days or less, more preferably 7 days or less, further preferably 5 days or less because crystallinity of zeolite tends to be retained.

The calcining atmosphere is not particularly limited as long as it is an atmosphere commonly used, and an air atmosphere, or an atmosphere to which an inert gas such as nitrogen or argon, or oxygen is added is usually used.

[Cation exchange]

The GIS-type zeolite can be, if necessary, subjected to cation exchange to a desired cation type. In such cation exchange, without limitation to the following, for example, carbonate such as sodium carbonate, potassium carbonate, lithium carbonate, rubidium carbonate, cesium carbonate, magnesium carbonate, calcium carbonate, strontium carbonate, barium carbonate or ammonium carbonate, or nitrate such as sodium nitrate, potassium nitrate, lithium nitrate, rubidium nitrate, cesium nitrate, magnesium nitrate, calcium nitrate, strontium nitrate, barium nitrate or ammonium nitrate, or a salt where a carbonate ion or a nitrate ion included in the carbonate or the nitrate is changed to a halide ion, a sulfate ion, a carbonate ion, a hydrogen carbonate ion, an acetate ion, a phosphate ion or a hydrogen phosphate ion, or an acid such as nitric acid or hydrochloric acid can be used.

The cation exchange temperature is not particularly limited as long as it is a common cation exchange temperature, and it is usually from room temperature to 100°C or less.

In separation of zeolite after such cation exchange, the separation method is not particularly limited as long as it is a common method. Filtration, decantation, a spray-drying method (rotary atomization, nozzle atomization, ultrasonic atomization or the like), a drying method using a rotary evaporator, a vacuum drying method, a freeze-drying method, a natural drying method, or the like can be used, and separation can be usually made by filtration or decantation.

The resultant from separation may be used as it is, or may be washed with water or a predetermined solvent. The resultant from separation can be, if necessary, dried.

The temperature at which the resultant from separation is dried is not particularly limited as long as it is a common drying temperature, and it is usually from room temperature to 150°C or less.

The atmosphere during drying is not particularly limited as long as it is an atmosphere commonly used, and an air atmosphere, or an atmosphere to which an inert gas such as nitrogen or argon, or oxygen is added is usually used.

Furthermore, an ammonium-type zeolite can also be calcined and thus converted to a proton-type zeolite.

The GIS-type zeolite of the present embodiment is not particularly limited in the application thereof, and can be used for, for example, separating agents or separation membranes for various gases and liquids, electrolyte membranes for fuel cells and the like, fillers of various resin molded articles, membrane reactors, catalysts for hydrocracking, alkylation and the like, catalyst carriers for carrying metals, metal oxides, and the like, adsorbents, desiccants, detergent aids, ion exchangers, waste water treatment agents, fertilizers, food additives, cosmetic additives, and the like.

Among the above, the GIS-type zeolite of the present embodiment can be suitably used as an adsorbent. That is, an adsorbent of the present embodiment includes the GIS-type zeolite of the present embodiment. The adsorbent of the present embodiment is thus configured, and thus a GIS-type zeolite is obtained which not only can sufficiently adsorb carbon dioxide, but also has no adsorption-desorption hysteresis in an adsorption-desorption isotherm of carbon dioxide. Therefore, the adsorbent can be particularly preferably used for the purpose of, for example, removal of carbon dioxide from natural gas.

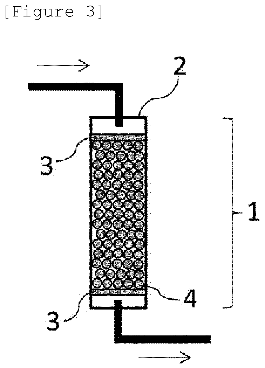

The adsorbent of the present embodiment is not particularly limited in terms of the configuration thereof as long as it includes the GIS-type zeolite of the present embodiment, and examples of a typical configuration include an example illustrated in Figure 3. An adsorbent 1 of the present embodiment, illustrated in Figure 3, includes a filter 3 disposed at each of two positions closer to the inlet and the outlet in a container 2, and a plurality of zeolite particles 4 (the GIS-type zeolite of the present embodiment) disposed between such two filters 3. For example, a filter formed from quartz can be used for the filter 3. For example, when the adsorbent 1 is used for removal of carbon dioxide from natural gas, the natural gas can be introduced through an upper line and impurities can be removed therefrom by the filter 3, thereafter carbon dioxide is selectively adsorbed and removed by the zeolite particles 4, and a methane-rich gas can be taken out through a lower line. Herein, an object to be subjected to the adsorbent is not limited to natural gas, and the inner structure of the adsorbent is also not limited to the example illustrated in Figure 3.

(Separation method)

The separation method of the present embodiment is to separate one or more gases selected from the group consisting of $CO_2$, $H_2O$, He, Ne, $Cl_2$, $NH_3$, and HCl from mixture including two or more gases selected from the group consisting of $H_2$, $N_2$, $O_2$, CO, and hydrocarbon, by use of an adsorbing material including the GIS-type zeolite of the present embodiment. In the present embodiment, it is preferable to separate one or more selected from the group consisting of $CO_2$ and $H_2O$ from a mixture including one or more gases selected from the group consisting of $N_2$, $O_2$, CO, and hydrocarbon. Herein, the hydrocarbon is not particularly limited, and examples thereof include methane, ethane, ethylene, propane, propylene, 1-butene, 2-butene, 2-methylpropene, dimethyl ether, and acetylene.

The GIS-type zeolite of the present embodiment is high in volume of adsorption of $CO_2$, and physical adsorption through no chemical bond is observed. Such a separation method using the GIS-type zeolite of the present embodiment is not particularly limited, and is preferably a method low in energy in reproduction of an adsorbing material and excellent in economic performance. A specific example of such a method here used is, but not particularly limited, preferably any of a pressure swing-type adsorption-separation method, a temperature swing-type adsorption-separation method, or a pressure/temperature swing-type adsorption-separation method. A pressure swing-type adsorption-separation method (PSA: Pressure Swing Adsorption) is a method where gas separation is performed by decreasing the pressure in gas desorption so that the pressure is lower than that in gas adsorption and utilizing the difference between the amount of adsorption at a high pressure and the amount of adsorption at a low pressure. A temperature swing-type adsorption-separation method (TSA: Thermal Swing Adsorption) is a method where gas separation is performed by increasing the temperature in gas desorption so that the temperature is higher than that in gas adsorption and utilizing the difference between the amount of adsorption at a low temperature and the amount of adsorption at a high temperature. A combined method of such methods is a pressure/temperature swing-type adsorption desorption method (PTSA: Pressure and Therml Swing Adsorption). Such methods can be performed in various known conditions.

Examples

Hereinafter, the present embodiment will be described with reference to Examples and the like in more detail, but such Examples are illustrative, and the present embodiment is not intended to be limited to the following Examples. The following Examples can be variously modified and carried out as the present embodiment by those skilled in the art, and such modifications are encompassed within the scope of the present invention as long as these can satisfy predetermined requirements of the present embodiment.

[Atomic percentages of aluminum, phosphorus, and potassium]

Each zeolite was thermally dissolved in an aqueous sodium hydroxide solution or aqua regia, and appropriately diluted to provide a liquid, and the liquid was used to measure the atomic percentages of silicon, aluminum, phosphorus, potassium and lithium in the zeolite by ICP-emission spectrochemical analysis (hereinafter, also referred to as "ICP-AES", apparatus name: SPS3520UV-DD, manufactured by Hitachi High-Tech Science Corporation). The contents of potassium and lithium in the zeolite were calculated in terms of the ratio (Z/T) of the total value (Z) of the amount of substance of potassium and lithium to the total value (T) of the amount of substance of alkali metals in the zeolite. The K/T was also calculated in the same manner. The content of potassium in the zeolite was calculated as the ratio (K/Al) of the atomic percentage of potassium to the atomic percentage of aluminum.

[Measurement of carbon atom content]

About 2 mg of a powder sample of the GIS-type zeolite was weighed, and the carbon atom content in the zeolite was measured by CHN elemental analysis (MT-6: apparatus name, manufactured by Anatec Yanaco Corporation). Since only a carbon atom contained in the zeolite was detected in a zeolite sample after adsorption of $CO_2$, the elemental analysis was made by placing such a zeolite powder sample in a closed container, performing vacuuming with a vacuum pump for 3 hours or more with heating at 200°C, then taking out the resultant in the air, and leaving the resultant to still stand in the air for 24 hours or more and then performing weighing.

[X-Ray diffraction; crystal structure analysis]

X-Ray diffraction was performed according to the following procedure.

(1) A dried product obtained in each of Examples and Comparative Examples was used as a sample, and pulverized by an agate mortar. A mixed product was used as a structure analysis sample, the product being obtained by further adding 10% by mass of crystalline silicon (produced by Rare Metallic Co., Ltd.) and mixing the resultant by an agate mortar until a homogeneous system was achieved.
(2) The sample in (1) above was uniformly secured on a non-reflective sample plate for powder, and crystal structure analysis was performed by X-ray diffraction in the following conditions.

X-ray diffraction apparatus (XRD): powder X-ray diffraction apparatus "RINT2500 Model" (trade name) manufactured by Rigaku Corporation
X-ray source: Cu tube (40 kV, 200 mA)
Measurement temperature: 25°C
Measurement range: 5 to 60°(0.02°/step)
Measurement speed: 0.2°/min
Slit width (scattering, diffusion, light reception): 1°, 1°, 0.15 mm

[Measurement of $^{27}$Al-MAS-NMR]

Water was put on the bottom of a desiccator, for humidity conditioning of a zeolite, and a zeolite placed in a sample tube was retained thereon for 48 hours. After humidity conditioning treatment, $^{27}$Al-MAS-NMR measurement was performed under the following conditions.

Apparatus: JEOL RESONANCE ECA700
Magnetic field intensity: 16.44 T ($^1$H resonant frequency 700 MHz)

Measurement nucleus: $^{27}$Al
Resonant frequency: 182.43 MHz
NMR tube: 3.2 mm$\varphi$ (rotor made of zirconia)
Measurement method: DD/MAS (dipolar decoupling magic angle spinning)
Pulse width: 15°
Waiting time: 0.5 sec
Cumulated number: 6,400 (measurement time: about 1 hour)
MAS: 18,000 Hz
Chemical shift reference: AlK(SO$_4$)$_2$ 12H$_2$O (0 ppm), external reference

The full width at half maximum in the resulting $^{27}$Al-MAS-NMR spectrum is obtained by analysis with Gauss and Lorenz functions by use of analysis program dmfit (#202000113 version), and optimization calculation of four parameters of the amplitude (the height of the maximum value in the spectrum), the position (each position in the spectrum, ppm), the width (the full width at half maximum in the spectrum, ppm), and the Gauss/Lorenz ratio (xG/(1 - x)L), according to the algorithm of the least squares method.

[Measurement of $^{29}$Si-MAS-NMR, and SAR]

Measurement of $^{29}$Si-MAS-NMR of the zeolite was performed by the following method. The SAR of the zeolite can be determined by measurement of $^{29}$Si-MAS-NMR.
First, water was put on the bottom of a desiccator, for humidity conditioning of a zeolite, and a zeolite placed in a sample tube was retained thereon for 48 hours. After humidity conditioning treatment, $^{29}$Si-MAS-NMR measurement was performed under the following conditions.

Apparatus: JEOL RESONANCE ECA700
Magnetic field intensity: 16.44 T ($^1$H resonant frequency 700 MHz)
Measurement nucleus: $^{29}$Si
Resonant frequency: 139.08 MHz
NMR tube: 4 mm$\varphi$ (rotor made of zirconia)
Measurement method: DD/MAS (dipolar decoupling magic anglespinning)
Pulse width: 45°
Waiting time: 50 sec
Cumulated number: 800 (measurement time; about 22 hours)
MAS: 10,000 Hz
Chemical shift reference: silicone rubber (-22.34 ppm), external reference

A molded article including a GIS-type zeolite shows the following five peaks in a $^{29}$Si-MAS-NMR spectrum.

(1) Q4(0Al): peak assigned to Si not bound with any Al via oxygen
(2) Q4(1Al): peak assigned to Si bound with one Al atom via oxygen
(3) Q4(2Al): peak assigned to Si bound with two Al atoms via oxygen
(4) Q4(3Al): peak assigned to Si bound with three Al atoms via oxygen
(5) Q4(4Al): peak assigned to Si bound with four Al atoms via oxygen

The peak positions in a $^{29}$Si-MAS-NMR spectrum are generally present at -112 ppm to -80 ppm, and can be assigned to Q4(0Al), Q4(1Al), Q4(2Al), Q4(3Al), or Q4(4Al) from the high magnetic field side. While the peak positions can be changed depending on cationic species present in the zeolite framework, the peak positions are generally present in the following ranges.

(1) Q4(0Al): -105 ppm to -112 ppm
(2) Q4(1Al): -100 ppm to -105 ppm
(3) Q4(2Al): -95 ppm to -100 ppm
(4) Q4(3Al): -87 ppm to -95 ppm
(5) Q4(4Al): -80 ppm to -87 ppm

The area intensities of the peaks in a $^{29}$Si-MAS-NMR spectrum are obtained by analysis with Gauss and Lorenz functions by use of analysis program dmfit (#202000113 version), and optimization calculation of four parameters of the amplitude (the height of the maximum value in the spectrum), the position (each position in the spectrum, ppm), the width (the full width at half maximum in the spectrum, ppm), and the Gauss/Lorenz ratio (xG/(1 - x)L), according to the algorithm of the least squares method. When the areas of the respective peaks of Q4(0Al), Q4(1Al), Q4(2Al), Q4(3Al), and Q4(4Al) are defined as A_Q4(0Al), A_Q4(1Al), A_Q4(2Al), A_Q4(3Al), and A_Q4(4Al), and the total value of A_Q4(0Al), A_Q4(1Al), A_Q4(2Al), A_Q4(3Al), and A_Q4(4Al) is defined as A_total, the SAR can be determined according to the following.

$$\text{SAR} = 100/[\text{A\_Q4}(1A1) / 4 + 2 \times \text{A\_Q4}(2A1) / 4 + 3 \times \text{A\_Q4}(3A1) /4 + 4 \times \text{A\_Q4}(4A1) / 4] \times 2$$

[Amount of adsorption of $CO_2$ and amount of hysteresis; Gas adsorption-desorption isotherm measurement]

Gas adsorption-desorption isotherm measurement was performed according to the following procedure.

(1) A dried product obtained in each of Examples and Comparative Examples was used as a sample, and 0.2 g thereof was placed in a 12-mm cell (manufactured by Micromeritics Instrument Corporation).
(2) The sample placed in the cell of (1) above was mounted in a gas adsorption measuring apparatus "3-Flex" (trade name) manufactured by Micromeritics Instrument Corporation, and subjected to a degassing treatment with heating under vacuum at 250°C and 0.001 mmHg or less for 12 hours.
(3) The sample placed in the cell after the treatment in (2) above was placed in constant-temperature circulating water at 25°C, and, after the sample temperature reached 25 ± 0.2°C, measurement with liquefied carbon dioxide gas (produced by Sumitomo Seika Chemicals Co., Ltd., purity: 99.9% by mass or more) was conducted with the absolute pressure being 0.25 up to 760 mmHg. Here, the pressure was measured over time during the measurement, and it was determined that the amount of saturation adsorption was achieved when the pressure variation reached 0.001%/10 sec or less, and the amount of saturation adsorption was defined as the amount of adsorption of $CO_2$ (unit: cc/g) at 25°C. The amount of adsorption of $CO_2$ is preferably 70 cc/g or more, more preferably 80 cc/g or more.
(4) Following the measurement of (3) above, the pressure was reduced over time from an absolute pressure of 760 to 0.25 mmHg, and desorption isotherm measurement of carbon dioxide was performed. For determination of equilibrium, measurement was performed in the same manner as (3) at a pressure variation of 0.001%/10 sec or less.
(5) The index representing the amount of hysteresis in an adsorption-desorption isotherm of carbon dioxide was as follows: when the amount of equilibrium adsorption at 75 mmHg in the adsorption isotherm measured in (3) and the amount of equilibrium adsorption at 75 mmHg in the desorption isotherm measured in (4) were respectively defined as q(Ad) and q(De), q(Ad)/q(De) was defined as the index representing the amount of hysteresis. A case of q(Ad)/q(De) = 1.00 indicates no hysteresis, and a smaller q(Ad)/q(De) indicates a state of a larger hysteresis.

[Example 1]

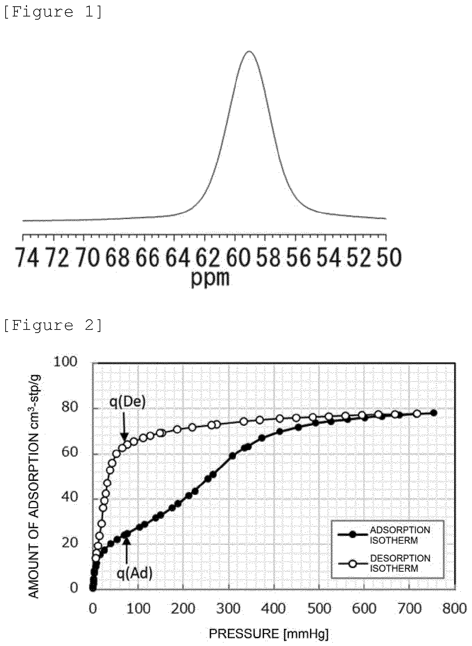

61.93 g of water, 0.202 g of sodium hydroxide (NaOH, produced by Wako Pure Chemical Industries, Ltd.), 3.39 g of sodium nitrate ($NaNO_3$, produced by FUJIFILM Wako Pure Chemical Corporation), 1.64 g of sodium aluminate ($NaAlO_2$, produced by FUJIFILM Wako Pure Chemical Corporation) and 10.82 g of colloidal silica (Ludox AS-40, solid concentration: 40% by mass, produced by W. R. Grace & Co.-Conn.) were mixed, and stirred for 30 minutes, thereby preparing a mixed gel. The composition of the mixed gel was as follows: $\alpha = (\text{L1}_2\text{O}+\text{L2O})/\text{SiO}_2 = 0.00$, $\beta = \text{OH}^-/(\text{M1}_2\text{O}+\text{M2O}) = 0.14$, $\gamma = \text{SiO}_2/\text{Al}_2\text{O}_3 = 8.17$, $\delta = \text{H}_2\text{O}/\text{Al}_2\text{O}_3 = 431.0$, $\varepsilon = \text{P}_2\text{O}_5/\text{Al}_2\text{O}_3 = 0.00$, and $\zeta = \text{R}/\text{Al}_2\text{O}_3 = 0.00$. The mixed gel was loaded to a 200-mL stainless micro-bomb (manufactured by HIRO COMPANY) with a fluororesin inner cylinder placed, and subjected to hydrothermal synthesis at a stirring speed of 30 rpm at 135°C for 4 days by a stirring type constant-temperature bath (manufactured by HIRO COMPANY) rotatable in a vertical direction of the micro-bomb. A product was subjected to filtration and dried at 120°C, and thereafter a powdered zeolite was obtained. It was confirmed from an XRD spectrum that the resulting zeolite was a GIS-type zeolite. Furthermore, there were not observed any peaks derived from other zeolite, amorphous silica-alumina and the like, and therefore the resulting zeolite was evaluated to be a high-purity GIS-type zeolite.
The resulting zeolite was subjected to $^{29}$Si-MAS-NMR measurement and the silica/alumina ratio was calculated, and as a result, SAR was 7.20. In addition, ICP-emission spectrochemical analysis was performed to measure various element concentrations, and Z/T was 0.00 (= K/T) and the potassium concentration K/Al in the zeolite was 0.00. The carbon atom concentration was measured by CHN analysis, but no carbon atom was detected.
A $^{27}$Al-MAS-NMR spectrum of the resulting zeolite is illustrated in Figure 1. The full width A at half maximum was 3.5 by the $^{27}$Al-MAS-NMR spectrum.
The adsorption isotherm and the desorption isotherm of $CO_2$ in the resulting GIS-type zeolite were measured, thus the amount of adsorption at 760 mmHg was 82.7 cc/g and q(Ad)/q(De) was 1.000.

[Example 2]

61.65 g of water, 0.30 g of an aqueous 48% sodium hydroxide solution (NaOH, solid concentration: 48% by mass, produced by Tokuyama Corporation), 2.27 g of sodium carbonate ($Na_2CO_3$, produced by Tokuyama Corporation), 1.64 g of sodium aluminate ($NaAlO_2$, produced by Hokuriku Kasei Industry Co., Ltd.) and 10.82 g of colloidal silica (Ludox AS-40, solid concentration: 40% by mass, produced by W. R. Grace & Co.-Conn.) were mixed, and stirred for 30 minutes, thereby preparing a mixed gel. The composition of the mixed gel was as follows: $\alpha = (L1_2O + L2O)/SiO_2 = 0.00$, $\beta = OH^-/(M1_2O + M2O) = 0.10$, $\gamma = SiO_2/Al_2O_3 = 8.17$, $\delta = H_2O/Al_2O_3 = 431.2$, $\varepsilon = P_2O_5/Al_2O_3 = 0.00$, and $\zeta = R/Al_2O_3 = 0.00$. The mixed gel was loaded to a 200-mL stainless micro-bomb (manufactured by HIRO COMPANY) with a fluororesin inner cylinder placed, and subjected to hydrothermal synthesis at a stirring speed of 30 rpm at 130°C for 5 days by a stirring type constant-temperature bath (manufactured by HIRO COMPANY) rotatable in a vertical direction of the micro-bomb. A product was subjected to filtration and dried at 120°C, and thereafter a powdered zeolite was obtained. 1g of the resulting zeolite was charged into 500 mL of an aqueous 0.05 N potassium carbonate solution adjusted with potassium carbonate ($K_2CO_3$, produced by Nippon Soda Co., Ltd.), and stirred at room temperature and 500 rpm for 3 hours. A product was subjected to filtration and dried at 120°C, and thus a powdered zeolite where the cation was partially exchanged with potassium was obtained. It was confirmed from an XRD spectrum that the resulting zeolite was a GIS-type zeolite. Furthermore, there were not observed any peaks derived from other zeolite, amorphous silica-alumina and the like, and therefore the resulting zeolite was evaluated to be a high-purity GIS-type zeolite.
Each value was determined in the same manner as in Example 1, and thus SAR was 7.20, and the full width A at half maximum was 4.2 and no carbon atom was detected by the $^{27}$Al-MAS-NMR spectrum. In addition, ICP-emission spectrochemical analysis was performed to measure various element concentrations, and Z/T was 0.98 (= K/T) and the potassium concentration K/Al in the zeolite was 0.98. The adsorption isotherm and the desorption isotherm of $CO_2$ were measured, thus the amount of adsorption at 760 mmHg was 84.5 cc/g and q(Ad)/q(De) was 1.000.

[Example 3]

141.41 g of water, 8.53 g of sodium nitrate (NaNOs, produced by FUJIFILM Wako Pure Chemical Corporation), 3.85 g of sodium aluminate ($NaAlO_2$, produced by FUJIFILM Wako Pure Chemical Corporation) and 17.41 g of amorphous silica (Perkasil SM500, produced by W. R. Grace & Co.-Conn.) were mixed, and stirred for 1 hour, thereby preparing a mixed gel. The composition of the mixed gel was as follows: $\alpha = (L1_2O + L2O)/SiO_2 = 0.00$, $\beta = OH^-/(M1_2O + M2O) = 0.00$, $\gamma = SiO_2/Al_2O_3 = 14.00$, $\delta = H_2O/Al_2O_3 = 379.3$, $\varepsilon = P_2O_5/Al_2O_3 = 0.00$, and $\zeta = R/Al_2O_3 = 0.00$. The mixed gel was loaded to a 300-mL stainless micro-bomb (manufactured by HIRO COMPANY) with a fluororesin inner cylinder placed, and subjected to hydrothermal synthesis at a stirring speed of 30 rpm at 130°C for 4 days by a stirring type constant-temperature bath (manufactured by HIRO COMPANY) rotatable in a vertical direction of the micro-bomb. A product was subjected to filtration and dried at 120°C, and thereafter a powdered zeolite was obtained. It was confirmed from an XRD spectrum that the resulting zeolite was a GIS-type zeolite. Furthermore, there were not observed any peaks derived from other zeolite, amorphous silica-alumina and the like, and therefore the resulting zeolite was evaluated to be a high-purity GIS-type zeolite.
Each value was determined in the same manner as in Example 1, and thus SAR was 10.4, and the full width A at half maximum was 2.2 and no carbon atom was detected by the $^{27}$Al-MAS-NMR spectrum. In addition, ICP-emission spectrochemical analysis was performed to measure various element concentrations, and Z/T was 0.00 (= K/T) and the potassium concentration K/Al in the zeolite was 0.00. The adsorption isotherm and the desorption isotherm of $CO_2$ were measured, thus the amount of adsorption at 760 mmHg was 80.5 cc/g and q(Ad)/q(De) was 1.000.

[Example 4]

141.41 g of water, 0.66 g of an aqueous sodium hydroxide solution (NaOH, produced by Wako Pure Chemical Industries, Ltd.), 2.43 g of sodium nitrate (NaNOs, produced by FUJIFILM Wako Pure Chemical Corporation), 0.55 g of sodium aluminate ($NaAlO_2$, produced by FUJIFILM Wako Pure Chemical Corporation) and 35.33 g of aluminosilicate (SIPERNAT 820A, produced by Evonik Industries) were mixed, and stirred for 1 hour, thereby preparing a mixed gel. The composition of the mixed gel was as follows: $\alpha = (L1_2O + L2O)/SiO_2 = 0.08$, $\beta = OH^-/(M1_2O + M2O) = 0.07$, $\gamma = SiO_2/Al_2O_3 = 14.00$, $\delta = H_2O/Al_2O_3 = 242.4$, $\varepsilon = P_2O_5/Al_2O_3 = 0.00$, and $\zeta = R/Al_2O_3 = 0.00$. The mixed gel was loaded to a 300-mL stainless micro-bomb (manufactured by HIRO COMPANY) with a fluororesin inner cylinder placed, and subjected to hydrothermal synthesis at a stirring speed of 30 rpm at 130°C for 5 days by a stirring type constant-temperature bath (manufactured by HIRO COMPANY) rotatable in a vertical direction of the micro-bomb. A product was subjected to filtration and dried at 120°C, and thereafter a powdered zeolite was obtained. It was confirmed from an XRD spectrum that the resulting zeolite was a GIS-type zeolite. Furthermore, there were not observed any peaks derived from other zeolite, amorphous silica-alumina and the like, and therefore the resulting zeolite was evaluated to be a high-purity GIS-type zeolite.

Each value was determined in the same manner as in Example 1, and thus SAR was 8.50, and the full width A at half maximum was 5.6 and no carbon atom was detected by the $^{27}$Al-MAS-NMR spectrum. In addition, ICP-emission spectrochemical analysis was performed to measure various element concentrations, and Z/T was 0.00 (= K/T) and the potassium concentration K/Al in the zeolite was 0.00. The adsorption isotherm and the desorption isotherm of $CO_2$ were measured, thus the amount of adsorption at 760 mmHg was 73.2 cc/g and q(Ad)/q(De) was 0.991.

[Comparative Example 1]

143.10 g of water, 40.00 g of an aqueous 50% sodium hydroxide solution (NaOH, solid concentration: 50% by mass, produced by Sigma-Aldrich), 2.70 g of an aluminum powder (Al, produced by FUJIFILM Wako Pure Chemical Corporation) and 75.10 g of colloidal silica (Ludox HS-40, solid concentration: 40% by mass, produced by Sigma-Aldrich) were mixed, and stirred for 24 hours, thereby preparing a mixed gel, based on the content of Non-Patent Literature 7. The composition of the mixed gel was as follows: $\alpha = (L1_2O + L2O)/SiO_2 = 0.00$, $\beta = OH^-/(M1_2O + M2O) = 1.00$, $\gamma = SiO_2/Al_2O_3 = 10.00$, $\delta = H_2O/Al_2O_3 = 220.0$, $\varepsilon = P_2O_5/Al_2O_3 = 0.00$, and $\zeta = R/Al_2O_3 = 0.00$. The mixed gel was loaded to a 300-mL stainless micro-bomb (manufactured by HIRO COMPANY) with a fluororesin inner cylinder placed, and subjected to hydrothermal synthesis at a stirring speed of 60 rpm at 150°C for 3 days by a stirring type constant-temperature bath (manufactured by HIRO COMPANY) rotatable in a vertical direction of the micro-bomb. A product was subjected to filtration and dried at 120°C, and thereafter a powdered zeolite was obtained. It was confirmed from an XRD spectrum that the resulting zeolite was a GIS-type zeolite. Furthermore, there were not observed any peaks derived from other zeolite, amorphous silica-alumina and the like, and therefore the resulting zeolite was evaluated to be a high-purity GIS-type zeolite.

Each value was determined in the same manner as in Example 1, and thus SAR was 6.00, and the full width A at half maximum was 5.7 and no carbon atom was detected by the $^{27}$Al-MAS-NMR spectrum. In addition, ICP-emission spectrochemical analysis was performed to measure various element concentrations, and Z/T was 0.00 (= K/T) and the potassium concentration K/Al in the zeolite was 0.00. The adsorption isotherm and the desorption isotherm of $CO_2$ were measured, thus the amount of adsorption at 760 mmHg was 79.8 cc/g and q(Ad)/q(De) was 0.365.

[Comparative Example 2]

207.30 g of water, 8.78 g of sodium hydroxide, 16.4 g of sodium aluminate and 248.3 g of liquid glass No. 3 were mixed, and stirred for 15 minutes, thereby preparing a mixed gel, based on the content of Patent Literature 3. The composition of the mixed gel was as follows: $\alpha = (L1_2O + L2O)/SiO_2 = 0.32$, $\beta = OH^-/(M1_2O + M2O) = 0.35$, $\gamma = SiO_2/Al_2O_3 = 12.40$, $\delta = H_2O/Al_2O_3 = 197.9$, $\varepsilon = P_2O_5/Al_2O_3 = 0.0$, and $\xi = R/Al_2O_3 = 0.00$. The mixed gel was loaded to a 1000-mL stainless autoclave with a fluororesin inner cylinder placed, and was subjected to hydrothermal synthesis at 130°C for 5 days without stirring, a product was subjected to filtration and dried at 120°C, and thereafter a powdered zeolite was obtained. Furthermore, there were not observed any peaks derived from other zeolite, amorphous silica-alumina and the like, and therefore the resulting zeolite was evaluated to be a high-purity GIS-type zeolite.

Each value was determined in the same manner as in Example 1, and thus SAR was 4.10, and the full width A at half maximum was 9.8 and no carbon atom was detected by the $^{27}$Al-MAS-NMR spectrum. In addition, ICP-emission spectrochemical analysis was performed to measure various element concentrations, and Z/T was 0.00 (= K/T) and the potassium concentration K/Al in the zeolite was 0.00. The adsorption isotherm and the desorption isotherm of $CO_2$ were measured, thus the amount of adsorption at 760 mmHg was 52.4 cc/g and q(Ad)/q(De) was 0.519.

[Comparative Example 3]

132.86 g of water, 15.66 g of sodium hydroxide, 7.2 g of sodium aluminate (produced by Alfa Aesar) and 25.56 g of colloidal silica (Ludox AS-40, solid concentration: 40% by mass) were mixed, and stirred at room temperature for 24 hours, thereby preparing a mixed gel, based on the content of Non-Patent Literature 1. The composition of the mixed gel was as follows: $\alpha = (L1_2O + L2O)/SiO_2 = 0.00$, $\beta = OH^-/(M1_2O + M2O) = 4.90$, $\gamma = SiO_2/Al_2O_3 = 7.96$, $\delta = H_2O/Al_2O_3 = 371.8$, $\varepsilon = P_2O_5/Al_2O_3 = 0.00$, $\xi = R/Al_2O_3 = 0.00$. The mixed gel was loaded to a 200-mL stainless autoclave with a fluororesin inner cylinder placed, and was subjected to hydrothermal synthesis at 100°C for 7 days without stirring, a product was subjected to filtration and dried at 120°C, and thereafter a powdered zeolite was obtained. Furthermore, there were not observed any peaks derived from other zeolite, amorphous silica-alumina and the like, and therefore the resulting zeolite was evaluated to be a high-purity GIS-type zeolite.

Each value was determined in the same manner as in Example 1, and thus SAR was 2.60, and the full width A at half maximum was 8.3 and no carbon atom was detected by the $^{27}$Al-MAS-NMR spectrum. In addition, ICP-emission spectrochemical analysis was performed to measure various element concentrations, and Z/T was 0.00 (= K/T) and the potassium concentration K/Al in the zeolite was 0.00. The adsorption isotherm and the desorption isotherm of $CO_2$ were measured, thus the amount of adsorption at 760 mmHg was 8.1 cc/g and q(Ad)/q(De) was 0.812.

[Comparative Example 4]

102.57 g of water, 2.45 g of sodium hydroxide (produced by Junsei Chemical Co., Ltd.), 1.15 g of sodium aluminate (produced by Showa Chemical Industry Co., Ltd.) and 24.07 g of liquid glass (produced by FUJIFILM Wako Pure Chemical Corporation) were mixed, and stirred at 1800 rpm under a $N_2$ atmosphere for 24 hours, thereby preparing a mixed gel, based on the content of Non-Patent Literature 3. The composition of the mixed gel was as follows: $\alpha =$ $(L1_2O + L2O)/SiO_2 = 0.32$, $\beta = OH^-/(M1_2O + M2O) = 0.82$, $\gamma = SiO_2/Al_2O_3 = 20.0$, $\delta = H_2O/Al_2O_3 = 840.0$, $\varepsilon = P_2O_5/Al_2O_3$ = 0.00, and $\xi = R/Al_2O_3 = 0.00$. The mixed gel was subjected to hydrothermal synthesis at 100°C for 24 hours with stirring at 1000 rpm, a product was subjected to filtration and dried at 120°C, and thereafter a powdered GIS-type zeolite was obtained.

Each value was determined in the same manner as in Example 1, and thus SAR was 4.68, and the full width A at half maximum was 14.7 and no carbon atom was detected by the $^{27}$Al-MAS-NMR spectrum. In addition, ICP-emission spectrochemical analysis was performed to measure various element concentrations, and Z/T was 0.00 (= K/T) and the potassium concentration K/Al in the zeolite was 0.00. The adsorption isotherm and the desorption isotherm of $CO_2$ were measured, thus the amount of adsorption at 760 mmHg was 9.8 cc/g and q(Ad)/q(De) was 0.788.

[Comparative Example 5]

17.6 g of sodium carbonate ($Na_2CO_3$, produced by FUJIFILM Wako Pure Chemical Corporation) was added to a product obtained by kneading 21.54 g of silicon dioxide ($SiO_2$, produced by FUJIFILM Wako Pure Chemical Corporation), 5.97 g of aluminum oxide ($Al_2O_3$, produced by FUJIFILM Wako Pure Chemical Corporation), 1.17 g of iron oxide ($Fe_2O_3$, produced by FUJIFILM Wako Pure Chemical Corporation), 0.27 g of titanium oxide ($TiO_2$, produced by FUJIFILM Wako Pure Chemical Corporation), 0.21 g of calcium oxide (CaO, produced by FUJIFILM Wako Pure Chemical Corporation), 0.06 g of magnesium oxide (MgO, produced by FUJIFILM Wako Pure Chemical Corporation), 0.03 g of sodium hydroxide, 0.21 g of potassium hydroxide, 0.05 g of phosphorus oxide ($P_2O_5$, produced by FUJIFILM Wako Pure Chemical Corporation), and 0.53 g of a carbon powder (produced by Strem Chemicals, Inc.) by an automatic mortar, and these were mixed and molten in an electric furnace at 1000°C for 1 hour, based on the content of Patent Literature 1. Thereafter, the molten product was cooled and pulverized, and 149.78 g of water was added so that the molar ratio of $H_2O/Na_2O$ was 50, thereby preparing a mixed gel. The composition of the mixed gel was as follows: $\alpha = (L1_2O + L2O)/SiO_2 = 0.02$, $\beta = OH^-/(M1_2O + M2O) = 0.03$, $\gamma = SiO_2/Al_2O_3 = 6.12$, $\delta = H_2O/Al_2O_3 = 142.0$, $\varepsilon = P_2O_5/Al_2O_3 = 0.00$, and $\xi = R/Al_2O_3 = 0.00$. The mixed gel was heated in an autoclave at 100°C for 24 hours, a product was subjected to filtration and dried at 120°C, and thereafter a powdered GIS-type zeolite was obtained.

Each value was determined in the same manner as in Example 1, and thus SAR was 3.33, and the full width A at half maximum was 7.5 and no carbon atom was detected by the $^{27}$Al-MAS-NMR spectrum. In addition, ICP-emission spectrochemical analysis was performed to measure various element concentrations, and Z/T was 0.00 (= K/T) and the potassium concentration K/Al in the zeolite was 0.00. The adsorption isotherm and the desorption isotherm of $CO_2$ were measured, thus the amount of adsorption at 760 mmHg was 2.4 cc/g and q(Ad)/q(De) was 0.043.

[Comparative Example 6]

0.55 g of sodium aluminate, and 2.91 g of sodium metasilicate ($Na_2SiO_3$, produced by FUJIFILM Wako Pure Chemical Corporation), were mixed with 10 cc of an aqueous 0.1 mol/L sodium hydroxide solution, thereby providing a mixed gel, based on the content of Non-Patent Literature 6. The composition of the mixed gel was as follows: $\alpha = (L1_2O + L2O)/SiO_2 = 1.00$, $\beta = OH^-/(M1_2O + M2O) = 0.08$, $\gamma = SiO_2/Al_2O_3 = 8.00$, $\delta = H_2O/Al_2O_3 = 166.0$, $\varepsilon = P_2O_5/Al_2O_3 =$ 0.00, and $\xi R/Al_2O_3 = 0.00$. The mixed gel was placed in a stainless micro-bomb and heated at 200°C for 7 days, thereby synthesizing a zeolite.

Each value was determined in the same manner as in Example 1, and thus SAR was 6.98, and the full width A at half maximum was 13.4 and no carbon atom was detected by the $^{27}$Al-MAS-NMR spectrum. In addition, ICP-emission spectrochemical analysis was performed to measure various element concentrations, and Z/T was 0.00 (= K/T) and the potassium concentration K/Al in the zeolite was 0.00. The adsorption isotherm and the desorption isotherm of $CO_2$ were measured, thus the amount of adsorption at 760 mmHg was 3.4 cc/g and q(Ad)/q(De) was 0.665.

[Comparative Example 7]

To a liquid where 18 g of sodium metasilicate pentahydrate ($Na_2O_3Si/5H_2O$, produced by Sigma-Aldrich) and 210.0 g of water were mixed was added 127.1 g of triethanolamine ($C_6H_{25}NO_3$, produced by Carl Roth GmbH + Co. KG), and stirred at 600 rpm for 30 minutes. To the liquid was added a liquid where 2.34 g of sodium hydroxide and 148.0 g of water were mixed, and stirred at room temperature and 600 rpm for 30 minutes, thereby providing a mixed liquid containing no Al, based on the content of Patent Literature 2. The composition of the mixed liquid was as follows: $\alpha$ = (L1$_2$O + L2O)/SiO$_2$ = 1.00, $\beta$ = OH$^-$/(M1$_2$O + M2O) = 0.51, $\gamma$ = SiO$_2$/Al$_2$O$_3$ = $\infty$, $\delta$ = H$_2$O/Al$_2$O$_3$ = $\infty$, $\varepsilon$ = P$_2$O$_5$/Al$_2$O$_3$ = $\infty$, and $\zeta$ = R/Al$_2$O$_3$ = $\infty$. 1.134 g of an aluminum powder (Al, produced by Wako Pure Chemical Industries, Ltd.) was loaded to a 1000-mL stainless autoclave with a fluororesin inner cylinder placed, the mixed liquid was placed therein, and was subjected to hydrothermal synthesis at 95°C for 5 days with neither any aging period nor stirring, a product was subjected to filtration and dried at 120°C, and thereafter a powdered zeolite was obtained.

Each value was determined in the same manner as in Example 1, and thus SAR was 4.60, and the full width A at half maximum was 9.2 and the carbon atom content was 13.5% by mass by the $^{27}$Al-MAS-NMR spectrum. In addition, ICP-emission spectrochemical analysis was performed to measure various element concentrations, and Z/T was 0.00 (= K/T) and the potassium concentration K/Al in the zeolite was 0.00. The adsorption isotherm and the desorption isotherm of $CO_2$ were measured, thus the amount of adsorption at 760 mmHg was 1.1 cc/g and q(Ad)/q(De) = 0.339.

[Comparative Example 8]

189.90 g of water, 8.17 g of aluminum isopropoxide, 17.37 g of tetraethyl orthosilicate (produced by Sigma-Aldrich), and 176.85 g of tetramethylammonium hydroxide pentahydrate (produced by Sigma-Aldrich) as the organic structure-directing agent were mixed, and stirred for 30 minutes, based on the content of Non-Patent Literature 5. The liquid was retained at 0°C for 1 hour, then stirred by a gyratory shaker for 20 hours, heated at 120°C for 33 minutes, and then cooled at 0°C for 15 minutes, thereby preparing a mixed gel. The composition of the mixed gel was as follows: $\alpha$ = (L1$_2$O + L2O)/SiO$_2$ = 0.00, $\beta$ = OH$^-$ / (M1$_2$O + M2O) = 2.05, $\gamma$ = SiO$_2$/Al$_2$O$_3$ = 4.78, $\delta$ = H$_2$O/Al$_2$O$_3$ = 253.0, $\varepsilon$ = P$_2$O$_5$/Al$_2$O$_3$ = 0.00, and $\xi$ = R/Al$_2$O$_3$ = 4.78. The mixed gel was subjected to hydrothermal synthesis at 100°C for 13 days, a product was subjected to filtration and dried at 120°C, and thereafter a powdered zeolite was obtained.

Each value was determined in the same manner as in Example 1, and thus SAR was 5.00, and the full width A at half maximum was 6.5 and the carbon atom content was 13.2% by mass by the $^{27}$Al-MAS-NMR spectrum. In addition, ICP-emission spectrochemical analysis was performed to measure various element concentrations, and Z/T was 0.00 (= K/T) and the potassium concentration K/Al in the zeolite was 0.00. The adsorption isotherm and the desorption isotherm of $CO_2$ were measured, thus the amount of adsorption at 760 mmHg was 0.3 cc/g and q(Ad)/q(De) was 0.225.

[Comparative Example 9]

259.10 g of water, 0.98 g of sodium hydroxide, 20.50 g of sodium aluminate and 310.4 g of liquid glass No. 3 were mixed, and stirred for 45 minutes, thereby preparing a mixed gel, based on the content of Patent Literature 4. The composition of the mixed gel was as follows: $\alpha$ = (L1$_2$O + L2O)/SiO$_2$ = 0.32, $\beta$ = OH$^-$/(M1$_2$O + M2O) = 0.03, $\gamma$ = SiO$_2$/Al$_2$O$_3$ = 12.0, $\delta$ = H$_2$O/Al$_2$O$_3$ = 200.0, $\varepsilon$ = P$_2$O$_5$/Al$_2$O$_3$ = 0.00, and $\xi$ = R/Al$_2$O$_3$ = 0.00. The mixed gel was loaded to a 1000-mL stainless autoclave with a fluororesin inner cylinder placed, and was subjected to hydrothermal synthesis at 110°C for 2 days without stirring, a product was subjected to filtration and dried at 120°C, and thereafter a powdered zeolite was obtained. 1 g of the resulting zeolite was charged into 500 mL of an aqueous 0.1 N potassium nitrate solution, and stirred at 60°C and 400 rpm for 3 hours. A product was subjected to filtration and dried at 120°C, and thereafter a powdered zeolite where the cation was partially exchanged with potassium was obtained.

Each value was determined in the same manner as in Example 1, and thus SAR was 4.10, and the full width A at half maximum was 12.1 and no carbon atom was detected by the $^{27}$Al-MAS-NMR spectrum. In addition, ICP-emission spectrochemical analysis was performed to measure various element concentrations, and Z/T was 0.97 (= K/T) and the potassium concentration K/Al in the zeolite was 0.97. The adsorption isotherm and the desorption isotherm of $CO_2$ were measured, thus the amount of adsorption at 760 mmHg was 67.5 cc/g and q(Ad)/q(De) was 0.157.

[Table 1]

| | Composition ratio of starting materials | | | | | | | Zeolite produced | | | | CO₂ | |
| | Si source | α | β | γ | δ | ε | ζ | SAR | Content of C [% by mass] | ²⁷AlNMR Full width A at half maximum | Content of K K/Al | Amount of adsorption at 100 kPa | Adsorption-desorption hysteresis q(Ad)/q(De) |
|---|---|---|---|---|---|---|---|---|---|---|---|---|---|
| Example 1 | Colloidal silica | 0.00 | 0.14 | 8.17 | 431.0 | 0.00 | 0.00 | 7.20 | 0.00 | 3.5 | 0.00 | 82.7 | 1.000 |
| Example 2 | Colloidal silica | 0.00 | 0.10 | 8.17 | 431.2 | 0.00 | 0.00 | 7.20 | 0.00 | 4.2 | 0.98 | 84.5 | 1.000 |
| Example 3 | Amorphous silica | 0.00 | 0.00 | 14.0 | 379.3 | 0.00 | 0.00 | 10.4 | 0.00 | 2.2 | 0.00 | 80.5 | 1.000 |
| Example 4 | Aluminosilicate | 0.08 | 0.07 | 14.0 | 242.4 | 0.00 | 0.00 | 8.50 | 0.00 | 5.6 | 0.00 | 73.2 | 0.991 |
| Comparative Example 1 | Colloidal silica | 0.00 | 1.00 | 10.0 | 220.0 | 0.00 | 0.00 | 6.00 | 0.00 | 5.7 | 0.00 | 79.8 | 0.365 |
| Comparative Example 2 | Liquid glass No. 3 | 0.32 | 0.35 | 12.4 | 197.9 | 0.00 | 0.00 | 4.10 | 0.00 | 9.8 | 0.00 | 52.4 | 0.519 |
| Comparative Example 3 | Colloidal silica | 0.00 | 4.90 | 7.96 | 371.8 | 0.00 | 0.00 | 2.60 | 0.00 | 8.3 | 0.00 | 8.1 | 0.812 |
| Comparative Example 4 | Liquid glass No. 3 | 0.32 | 0.82 | 20.0 | 840.0 | 0.00 | 0.00 | 4.68 | 0.00 | 14.7 | 0.00 | 9.8 | 0.788 |
| Comparative Example 5 | Coal ash | 0.02 | 0.03 | 6.12 | 142.0 | 0.00 | 0.00 | 3.33 | 0.00 | 7.5 | 0.00 | 2.4 | 0.043 |
| Comparative Example 6 | Sodium metasilicate | 1.00 | 0.08 | 8.00 | 166.0 | 0.00 | 0.00 | 6.98 | 0.00 | 13.4 | 0.00 | 3.4 | 0.665 |
| Comparative Example 7 | Sodium metasilicate | 1.00 | 0.51 | - | - | - | - | 4.60 | 13.50 | 9.2 | 0.00 | 1.1 | 0.339 |
| Comparative Example 8 | TEOS | 0.00 | 2.05 | 4.78 | 253.0 | 0.00 | 4.78 | 5.00 | 13.21 | 6.5 | 0.00 | 0.3 | 0.225 |
| Comparative Example 9 | Liquid glass No. 3 | 0.32 | 0.03 | 12.0 | 200.0 | 0.00 | 0.00 | 4.10 | 0.00 | 12.1 | 0.97 | 67.5 | 0.157 |

In Table 1, $\alpha$ to $\zeta$ each represent the following molar ratio.

$$\alpha = (L1_2O + L2O)/SiO_2$$

(wherein L1 and L2 respectively represent the alkali metal and the alkaline earth metal contained in the silica source.),

$\beta$ = OH-/ (M1$_2$O + M2O) (wherein M1 represents the alkali metal and M2 represents the alkaline earth metal),
$\gamma$ = SiO$_2$/Al$_2$O$_3$,
$\delta$ = H$_2$O/Al$_2$O$_3$,
$\varepsilon$ = P$_2$O$_5$/Al$_2$O$_3$,
$\xi$ = R/Al$_2$O$_3$ (R represents the organic structure-directing agent.)

Industrial Applicability

The GIS-type zeolite according to the present invention has industrial applicability to separating agents or separation membranes for various gases and liquids, electrolyte membranes for fuel cells and the like, fillers of various resin molded articles, membrane reactors, catalysts for hydrocracking, alkylation and the like, catalyst carriers for carrying metals, metal oxides, and the like, adsorbents, desiccants, detergent aids, ion exchangers, waste water treatment agents, fertilizers, food additives, cosmetic additives, and the like.

Reference Signs Lists

1    adsorbent
2    container
3    filter
4    zeolite particle

**Claims**

1.  A GIS-type zeolite, having a silica/alumina ratio of 0.87 or more, wherein
    when a full width at half maximum of a peak derived from Al in a framework of the zeolite, observed in a $^{27}$Al-MAS-NMR spectrum, is defined as A, A $\leq$ 5.6 ppm is satisfied.

2.  The GIS-type zeolite according to claim 1, comprising potassium as cationic species in the zeolite.

3.  The GIS-type zeolite according to claim 2, wherein a ratio (K/Al) of an atomic percentage of potassium to an atomic percentage of aluminum in the zeolite is 0.05 or more.

4.  The GIS-type zeolite according to claim 1, wherein a ratio (Z/T) of a total value (Z) of amount of substance of potassium and lithium to a total value (T) of amount of substance of alkali metals in the zeolite is 0.05 or more.

5.  The GIS-type zeolite according to claim 1, having a carbon atom content of 4% by mass or less.

6.  The GIS-type zeolite according to claim 1, comprising silica-alumina.

7.  An adsorbing material comprising the GIS-type zeolite according to any of claims 1 to 6.

8.  A separation method comprising separating one or more selected from the group consisting of CO$_2$, H$_2$O, He, Ne, Cl$_2$, NH$_3$, and HCl from a mixture including two or more gases selected from the group consisting of H$_2$, N$_2$, O$_2$, Ar, CO, and hydrocarbon, by use of the adsorbing material according to claim 7.

9.  The separation method according to claim 8, wherein the gas separation is performed by a pressure swing-type adsorption-separation method, a temperature swing-type adsorption-separation method, or a pressure/temperature swing-type adsorption-separation method.

[Figure 1]

[Figure 2]

[Figure 3]

<div style="text-align:center">**INTERNATIONAL SEARCH REPORT**</div>

| International application No. |
|---|
| **PCT/JP2022/021928** |

**A. CLASSIFICATION OF SUBJECT MATTER**

  *C01B 39/02*(2006.01)i; *B01D 53/04*(2006.01)i; *B01D 53/047*(2006.01)i; *B01D 53/62*(2006.01)i; *B01J 20/18*(2006.01)i
  FI:   C01B39/02; B01D53/047; B01D53/04 220; B01D53/62; B01J20/18 A

According to International Patent Classification (IPC) or to both national classification and IPC

**B. FIELDS SEARCHED**

Minimum documentation searched (classification system followed by classification symbols)

  C01B39/02; B01D53/04; B01D53/047; B01D53/62; B01J20/18

Documentation searched other than minimum documentation to the extent that such documents are included in the fields searched

  Published examined utility model applications of Japan 1922-1996
  Published unexamined utility model applications of Japan 1971-2022
  Registered utility model specifications of Japan 1996-2022
  Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2019/202933 A1 (ASAHI KASEI KABUSHIKI KAISHA) 24 October 2019 (2019-10-24) claims, examples | 1-9 |
| A | WO 2018/110559 A1 (ASAHI KASEI KABUSHIKI KAISHA) 21 June 2018 (2018-06-21) claims, examples | 1-9 |
| A | KR 10-1444939 B1 (THE INDUSTRY & ACADEMIC COOPERATION IN CHUNGNAM NATIONAL UNIVERSITY (IAC)) 30 September 2014 (2014-09-30) claims | 1-9 |
| P, X | CHOI, Hyun-June et al. Effect of framework Si/Al ratio on the mechanism of CO2 adsorption on the small-pore zeolite gismondine. Chemical Engineering Journal. 26 November 2021, 433 (2022) 133800, pp. 1-9 2. Materials and Methods, 3. Results and discussion | 1, 5-9 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 June 2022** | **12 July 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2022/021928**

| Patent document cited in search report | | | Publication date (day/month/year) | Patent family member(s) | | | Publication date (day/month/year) |
|---|---|---|---|---|---|---|---|
| WO | 2019/202933 | A1 | 24 October 2019 | US | 2020/0223706 | A1 | |
| | | | | claims, examples | | | |
| | | | | EP | 3712112 | A1 | |
| | | | | CN | 111051242 | A | |
| | | | | AU | 2019256941 | A | |
| | | | | CA | 3085838 | A | |
| | | | | BR | 112020010711 | A | |
| WO | 2018/110559 | A1 | 21 June 2018 | US | 2019/0039045 | A1 | |
| | | | | claims, examples | | | |
| | | | | AU | 2017329099 | A | |
| | | | | CN | 108495813 | A | |
| KR | 10-1444939 | B1 | 30 September 2014 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 6340417 A
- WO 2012519148 A
- WO 2018110559 A
- WO 2019202933 A

### Non-patent literature cited in the description

- **MATTHEW D. OLEKSIAK ; ARIAN GHORBANPOUR ; MARLON T. CONATO ; B. PETER MCGRAIL ; LARS C. GRABOW ; RADHA KISHAN MOTKURI ; JEFFREY D. RIMER.** Synthesis Strategies for Ultrastable Zeolite GIS Polymorphs as Sorbents for Selective Separations. *Chem. Eur. J.,* 2016, vol. 22, 16078-16088
- **PANKAJ SHARMA ; JEONG-GU YEO ; MOON HEE HAN ; CHURL HEE CHO.** Knobby surfaced, mesoporous, single-phase GIS-NaP1 zeolite microsphere synthesis and characterization for H2 gas adsorption. *J. Mater. Chem. A,* 2013, vol. 1, 2602-2612
- **PANKAJ SHARMA ; JEONG-GU YEO ; MOON HEE HAN ; CHURL HEE CHO.** GIS-NaP1 zeolite microspheres as potential water adsorption material: Influence of initial silica concentration on adsorptive and physical/topological properties. *Sci. Rep.,* 2016, vol. 6, 1-26
- **ARTURO J. HERNANDEZ-MALDONADO ; RALPH T. YANG ; DANIEL CHINN ; CURTIS L. MUNSON.** Partially Calcined Gismondine Type Silicoaluminophosphate SAPO-43: Isopropylamine Elimination and Separation of Carbon Dioxide, Hydrogen Sulfide, and Water. *Langmuir,* 2003, vol. 19, 2193-2200
- **JOHANN KECHT ; B. MIHAILOVA ; K. KARAGHIOSOFF ; S. MINTOVA ; THOMAS BEIN.** Nanosized Gismondine Grown in Colloidal Precursor Solutions. *Langmuir,* 2004, vol. 20, 5271-5276
- **ULF HAKANSSON ; LARS FALTH ; STAFFAN HANSEN.** Structure of a High-Silica Variety of Zeolite Na-P. *Acta Cryst.,* 1990, vol. C46, 1363-1364
- **HYUN JUNE CHOI ; JUNG GI MIN ; SANG HYUN AHN ; JIHO SHIN ; SUK BONG HONG ; SAMBHU RADHAKRISHNAN ; C. VINOD CHANDRAN ; ROBERT G. BELL ; ERIC BREYNAERT ; CHRISTINE E. A. KIRSCHHOCK.** Framework flexibility-driven CO2 adsorption on a zeolite. *Mater. Horiz.,* 2020, 1528-1532